# EUROPEAN PATENT SPECIFICATION

(11) **EP 2 931 818 B1**
(45) Date of publication and mention of the grant of the patent: **19.10.2016**
(21) Application number: 13843041.8
(22) Date of filing: 08.03.2013
(51) Int. Cl.: C09D 5/08, C23F 11/00

(54) **PROCESS FOR PROVIDING METALLIC SUBSTRATES WITH CORROSION RESISTANCE**
VERFAHREN ZUR BEREITSTELLUNG VON METALLSUBSTRATEN MIT KORROSIONSBESTÄNDIGKEIT
PROCÉDÉ POUR DOTER DES SUBSTRATS MÉTALLIQUES D'UNE RÉSISTANCE À LA CORROSION

(43) Date of publication of application: 21.10.2015
(73) Proprietor: BYK-Chemie GmbH, 46483 Wesel (DE); BYK USA, Inc., Wallingford, CT 06492-4453 (US)
(72) Inventor: McMULLIN, Robert, Cheshire, CT 06410 (US); COPPOLA, Michael, Trumbull, CT 03311 (US); HANITZSCH, Ninja, D - 46047 Oberhausen (DE)
(74) Representative: Von Rohr Patentanwälte Partnerschaft mbB
(86) International application number: PCT/US2013/029843
(87) International publication number: WO 2014/137352

(56) References cited:
- EP-A2- 2 234 192
- FR-A1- 2 905 700

## Description

The present invention relates to the technical field of providing corrosion resistant coatings or anticorrosion coatings on substrates which are susceptible to corrosion, particularly on metallic substrates, especially of providing chromate-free corrosion resistant (anticorrosion) coatings on such substrates.

In particular, the present invention relates to a process for providing a substrate, particularly a metallic substrate, with corrosion resistance and/or with anticorrosion properties by treating at least one surface of the substrate at least partially with an anticorrosion composition as well as to the respective anticorrosion composition itself and to its use.

Moreover, the present invention relates to an anticorrosion coating, especially applied onto a substrate, particularly onto a metallic substrate, which anticorrosion coating is obtainable by the inventive process.

Finally, the present invention relates to a substrate, particularly to a metallic substrate, provided with corrosion resistance and/or with anticorrosion properties.

Corrosion resistant coatings (synonymously also denoted as anticorrosion coatings) are of great importance since corrosion drastically decreases the lifetime of metallic substrates and may even lead to failures of structural elements, thus resulting in high economic costs.

Typically, corrosion is occurring in various forms and can be classified by the deterioration of the metallic surface.

In general, the term corrosion denotes the reaction of a material or substrate with its environment, which leads to a measurable or analyzable change in the properties or to a deterioration of such material or substrate, thus affecting the function of a system, a structural part or an element. As delineated above, corrosion usually appears in but is not limited to metallic materials or substrates (cf. German standard DIN EN ISO 8044, previously DIN 50900).

Usually, corrosion is the gradual destruction of materials, especially metals, by chemical reactions with their environment. In the most common use of the word, the term corrosion denotes an electrochemical oxidation of metals in reaction with an oxidant, particularly oxygen. Rusting, i.e. the formation of iron oxides, is a well-known example of electrochemical corrosion. This type of damage typically produces oxide(s) or salt(s) of the original metal. In principal, corrosion can also occur in materials other than metals, such as ceramics or polymers, though in this context the term degradation is more common. Corrosion degrades the useful properties of materials and structures including strength, impermeability to liquids and gases and appearance.

Many structural alloys corrode merely by exposure to moisture in air, but the process can be strongly affected by exposure to certain substances. Corrosion can be concentrated locally to form a pit or crack, or it can extend across a wide area more or less uniformly corroding the surface of a material.

For further details relating to the terms "corrosion", "corrosion inhibitor" and "corrosion protection", reference may be made, for example, to Römpp Chemielexikon, 10th edition, Georg Thieme Verlag, Stuttgart/New York, Volume 3, 1997, pages 2252 to 2254, and also to the literature referred to therein, the entire disclosure content of which is hereby incorporated by reference.

Since corrosion is a diffusion-controlled process, it occurs on exposed surfaces. As a result, methods to reduce the activity of the exposed surface, such as passivation or chromate conversion, can increase corrosion resistance. However, some corrosion mechanisms are less visible and less predictable.

In this regard, general attack corrosion deteriorates the entire exposed surface of the metal but can generally be detected quite well. In contrast, localized corrosion like pitting, crevice corrosion and filliform corrosion is only occurring at specific areas of the metal substrate where the protective coating is damaged or shows defects and is therefore much harder to detect.

Pitting occurs if a lack of oxygen is created around a small area of the metal, thus becoming anodic while part of the metal showing excess of oxygen becomes cathodic. This will result in a localized galvanic reaction leading to corrosion only in extremely localized areas of the metal, thus creating very small holes in the metal.

Crevice corrosion generally occurs under acidic conditions or oxygen poor environments in spaces called crevices which are poorly accessibly by the working fluid from the environment. This kind of corrosion is often observed in gaps and contact areas between parts, under gaskets or seals, inside cracks and seams, in spaces filled with deposits and under sludge piles.

In contrast to crevice corrosion, filiform corrosion is starting at small defects in the coating and spreads under the coating in the form of thread-like filaments until the coating is not longer continuous. Furthermore, a bulging of the coating is often observed due to the formation of corrosion products under the coating.

Moreover, intergranular corrosion (IGC) is observed at grain boundaries of the metal since the concentration of impurities responsible for this type of corrosion is much higher at the grain boundaries of the metal, thus rendering these grain boundaries more vulnerable to corrosion than other areas of the metal. Additionally, this kind of corrosion is also observed if the corrosion inhibitor is fully or partly removed from the grain boundaries by some mechanism.

Furthermore, high temperature corrosion is due to combustion products of fuels containing vanadium or sulfates since these combustion products are very corrosive towards metals and metal alloys. This type of corrosion can also be caused by high temperature oxidation, sulfidation and carbonization.

Finally, seawater corrosion occurs in constructive parts like vessels or fixed structures on the shore, offshore and underwater which are exposed to seawater. This type of corrosion generally takes place over months to years. The corrosion velocity is mainly dependent on the concentration of the salt and only to a lesser degree on the temperature.

To effectively prevent corrosion of metal substrates, anticorrosion coatings containing high amounts of sacrificial corrosion inhibitors of up to 90 % by weight of the total coating have been developed. As sacrificial corrosion inhibitors, metal corrosion inhibitors being more active than the metal to be protected are generally employed. At the present, the most widely used sacrificial corrosion inhibitor is metallic zinc.

Since the anticorrosion performance of a coating comprising sacrificial corrosion inhibitors is mainly determined by the amount of corrosion inhibitors present in the coating, high amounts of these corrosion inhibitors have to be used to achieve a satisfying corrosion resistance, thus rendering these coatings very expensive due to the high raw materials costs. Moreover, the manageability of these coatings is drastically reduced due to the high solid content. Furthermore, the anticorrosion coatings having a high content of solid corrosion inhibitors posses a high weight due to the high amounts of the relatively heavy corrosion inhibitors like metallic zinc necessary to achieve a satisfying corrosion resistance.

Additionally, the amount of metallic zinc is limited to a critical pigment volume concentration (CPVC) above which insufficient wetting of the metallic zinc with the organic matrix, especially the organic resin, is observed, due to the amount of organic matrix not being sufficient to wet and fill the voids between the discrete zinc particles. This, however, results in air voids within the anticorrosion coating. The presence of air voids in turn results in significantly decreased mechanical, thermal and optical properties.

Apart from anticorrosion coatings containing sacrificial anticorrosion inhibitors, also anticorrosion coatings containing inhibitive pigments show a high corrosion resistance. According to their effect on cathodic and anodic corrosion reactions, these inhibitive pigments are classified into cathodic inhibitors, on the one hand, and anodic inhibitors, on the other hand.

Typical cathodic inhibitors are inorganic salts of manganese and magnesium, which protect the cathode by forming insoluble hydroxides under neutral conditions. In contrast, anodic inhibitors like inorganic salts of phosphate, borate, chromate and silicate compounds form a protective oxide layer on the metal substrate, thus preventing corrosion.

Over several decades, anodic inhibitors like zinc chromates and strontium chromates have been used extensively as anticorrosion coatings, especially for the protection of aluminum particularly used in the fabrication of aircrafts, because of their performance in corrosion protection.

However, chromates are very toxic and were shown to cause cancer in humans even when present in the human body in very small amounts. For this reason, several countries, including Europe, have restricted the use of chromates, especially hexavalent chromium. Due to the high toxicity of chromate containing anticorrosion coatings, their use poses a tremendous environmental problem since the waste of objects like structural elements treated with these anticorrosion coatings needs to be disposed in a costly and time consuming manner.

In regard to the problems posed by chromate containing anticorrosion coatings, phosphate based inhibitive pigments like zinc phosphate are widely applied, especially in the European coating industry. However, the main drawbacks of inhibitive pigments are the high amounts of these inhibitive pigments of at least 10 % by weight, based on the anticorrosion coating, necessary to provide satisfying anticorrosion resistance, thus resulting in high economic costs and a high weight of the anticorrosion coating due to high amounts of expensive nanosized inhibitive pigments. A reduction of the amount of the inhibitive pigments to decrease the costs and the weight of the anticorrosion coatings is not possible since smaller amounts of the inhibitive pigments even increase the rate of corrosion by forming an anode to cathode area within the anticorrosion coatings as such.

However, the outstanding corrosion protection of anticorrosion coatings containing chromates is not at all reached with any of the anodic corrosion inhibitors currently used in coating compositions.

Therefore, there is a need to find non-toxic corrosion inhibitor substitutes exhibiting the outstanding performance of chromate containing anticorrosion coatings even if the substitutes are added to the anticorrosion coatings in much lower amounts compared to the inhibitive pigments used in the prior art in order to decrease the economic costs and the weight of the resulting anticorrosion coatings as well as to increase the manageability of the anticorrosion coatings.

Recently, alternative compounds such as carbon-based materials have been tentatively tested as non-toxic corrosion inhibitor substitutes. However, so far, no sufficient corrosion protection could be achieved. Furthermore, no efficient incorporation of the carbon-based materials in usual coating systems could be reached; however, a stable and homogenous dispersion of carbon-based materials would be necessary in order to obtain a high storage stability of the initial coating composition as well as a high corrosion resistance in the final coating. Moreover, such coating compositions require excessive amounts of the carbon-based material in order to obtain some corrosion resistance, thus leading to high production costs of the resulting coating compositions since the specific carbon-based materials used for this purpose are very expensive.

Document EP 2 234 192 A2 refers to a method of manufacturing a metallic bipolar plate for fuel cells. The method comprises the steps of preparing a metal plate as a matrix of a metallic bipolar plate; degreasing and pickling a surface of the metal plate for pretreatment; coating a composition on the pickled surface of the metal plate and drying the surface of the metal plate on which the composition is coated. The composition shall comprise a binder resin, carbon particles and a solvent in a specific mixing ratio.

Document FR 2 905 700 A1 refers to a powdery composition which comprises homo- or copolyamides for the coating of metallic substrates, wherein the composition also comprises specific adhesion promoters as well as reinforcement particles.

In relation to industrial implementation, these prior art anticorrosion coatings are associated with great disadvantages, and consequently there is an increased demand for anticorrosion coatings containing such alternative substitutes in very small amounts but showing at least equal or even better corrosion resistance than anticorrosion coatings of the prior art containing chromate compounds.

Therefore, it is an object of the present invention to provide a process for providing a substrate with corrosion resistance and/or anticorrosion properties, i.e. with the intention that the disadvantages outlined above and associated with the prior art should be at least substantially avoided or else be at least attenuated.

A further object of the present invention is to provide anticorrosion compositions containing significantly reduced amounts of carbon-based additives like carbon nanotubes (CNTs) or analogous carbon allotropes in respect to coating compositions of the prior art, but at the same time having superior chemical and/or mechanical properties, in particular improved corrosion resistance, improved flexibility and/or improved adhesion to metal substrates.

Another object of the present invention is to provide anticorrosion compositions which allow for excellent corrosion resistance or anticorrosion properties when applied onto respective substrates, especially metal substrates.

Moreover, an even further object of the present invention is to provide anticorrosion coatings which exhibit significantly reduced production costs and total (net) weight of the anticorrosion coatings.

Additionally, it is a further object of the present invention to provide a substrate, particularly a metallic substrate, with excellent corrosion resistance or anticorrosion properties on the basis of a specific anticorrosion composition.

To solve the problems outlined above, the present invention proposes a process for providing a substrate with corrosion resistance and/or with anticorrosion properties as defined in Claim 1. Further advantageous properties of the process of the present invention are subject-matter of the relevant dependent process claims.

A further subject-matter of the present invention is an anticorrosion composition for providing a substrate with corrosion resistance and/or with anticorrosion properties as defined in the corresponding claims directed to the anticorrosion composition itself.

Moreover, a further subject of the present invention is the use of the anticorrosion composition of the present invention as defined in the corresponding use claims.

Furthermore, a further subject of the present invention is an anticorrosion coating which is obtainable by the process of the present invention, such anticorrosion coating being defined in the independent claim directed to such anticorrosion coating. Further advantageous properties of the anticorrosion coating according to the present invention are subject-matter of the respective dependent claims directed to the anticorrosion coating.

Finally, a further subject of the present invention is a substrate provided with corrosion resistance and/or with anticorrosion properties which is obtainable by treating the substrate at least partially with an anticorrosion composition of the invention, such substrate being defined in the respective claims.

It is clear to the skilled practitioner that any embodiments, modifications, advantages and the like which are hereinafter only delineated in connection with one aspect of the present invention also apply to all further aspects of the present invention in order to avoid unnecessary repetitions.

Moreover, it is clear to the skilled practitioner that any subsequent indications of values, numbers, ranges and the like are not to be understood in a limiting matter; it is readily evident and realizable for the skilled practitioner that the indicated ranges can be left in relative to the application or as a result of a specific case without departing the scope of the present invention.

Additionally, it is clear to the skilled practitioner that any values and parameters or the like listed hereinafter can in general be determined with standardized or explicitly mentioned measurement procedures or can be determined with measurement procedures which are familiar to the skilled practitioner in this area.

Moreover, in case of indications of percentages of used compounds and the like, the quantitative parts have to be combined in a way such that a total of 100 % or 100 % by weight, respectively, is resulting. This is also readily evident and realizable for the skilled practitioner.

The present invention - according to a **first** aspect of the present invention - accordingly provides a process for providing a substrate, especially a metallic substrate, with corrosion resistance and/or with anticorrosion properties (i.e., in other words, a process for providing corrosion resistance and/or anticorrosion properties to a substrate) by treating at least one surface of the substrate at least partially with an anticorrosion composition,
wherein, according to the inventive process, the anticorrosion composition used in the inventive process comprises:
(i) a dispersion medium as a continuous phase in an amount from 3 to 99.999 % by weight, particularly in an amount from 20 to 99.999 % by weight, preferably in an amount from 50 to 99.999 % by weight, based on the anticorrosion composition;
(ii) at least one carbon-based additive selected from the group consisting of carbon nanotubes (CNTs) and analogous carbon allotropes as well as mixtures and combinations thereof in an amount from 0.001 to 4 % by weight, based on the anticorrosion composition,
   wherein the analogous carbon allotropes are selected from the group consisting of (i) optionally modified graphites; (ii) optionally modified graphenes; (iii) fullerenes; (iv) carbon blacks; (v) carbon fibers; (vi) optionally modified carbon nanohorns (CNHs); (vii) carbon nanocones (CNCs); (viii) onion-like carbons (OLCs); and (ix) mixtures and combinations thereof;
(iii) at least one dispersing agent (dispersant) in an amount from 0.0001 to 20 % by weight based on the anticorrosion composition,
   wherein the at least one dispersing agent is selected from the group consisting of (i) polymers and copolymers having functional groups and/or groups with pigment affinity; (ii) alkylammonium salts of polymers and copolymers; (iii) polymers and copolymers having acidic groups; (iv) comb copolymers and block copolymers; (v) optionally modified acrylate block copolymers; (vi) optionally modified polyurethanes; (vii) optionally modified and/or salified polyamines; (viii) phosphoric esters; (ix) ethoxylates; (x) polymers and copolymers having fatty acid radicals; (xi) optionally modified polyacrylates; (xii) optionally modified polyesters; (xiii) polyphosphates; and (xiv) mixtures thereof;
wherein the anticorrosion composition is a dispersion comprising the carbon-based additive dispersed in the continuous phase.

Applicant has now surprisingly found out that an outstanding corrosion resistance and/or outstanding anticorrosion properties can be provided to a substrate if this substrate is purposefully treated with an anticorrosion composition as defined above, the anticorrosion composition comprising at least one carbon-based additive in very small amounts, thus rendering the inventive process very economic and inexpensive.

Moreover, the carbon-based additives used in the inventive process do not possess the high toxicity of chromate compounds used in the prior art in order to prepare anticorrosion coatings. Therefore, the inventive process shows a significantly increased manageability, especially during both the production of the anticorrosion composition and the application of the anticorrosion composition on the substrate. Furthermore, the substrates prepared by the inventive process can be disposed without costly treatment as is the case for substrates with chromate containing anticorrosion compositions or coatings due to the high toxicity thereof.

Furthermore, the inventive process also surprisingly results in an increased flexibility of the anticorrosion coating. Without wishing to be bound to a specific theory, the observed flexibility of the anticorrosion coating resulting from the inventive process might be due to the mobility of the carbon-based additive inside the anticorrosion coating. The increase in flexibility also results in an enhanced adhesion of the anticorrosion composition and the resulting coating to the substrate, thus avoiding adhesion promoters (which are necessary in prior art, especially for aqueous anticorrosion compositions commonly showing a very low adhesion to metal substrates). Moreover, the enhanced flexibility and adhesion of the inventive anticorrosion compositions and coatings also significantly increase the corrosion resistance or anticorrosion properties of substrates prepared according to the inventive process.

Additionally, the increase in flexibility is achieved even if only very small amounts of the carbon-based additive are present, thus further increasing the manageability and reducing the costs of the inventive process. In contrast, in anticorrosion coatings of the prior art, much higher amounts of additives are required in order to achieve a certain flexibility at all.

Moreover, the inventive process renders it possible to further increase the corrosion resistance or anticorrosion properties of substrates treated with the anticorrosion composition by a purposeful surface modification, especially by a surface functionalization, of the carbon-based additives with functional groups capable of interacting with the continuous phase without generating defects in the sp²-backbone of the carbon-based additives (as it is the case when applying chemical modification, e.g. oxidation) since these defects would drastically decrease the anticorrosion properties of the anticorrosion coating. The interaction of the functional groups of the carbon-based additive with the continuous phase during the crosslinking reaction leads to an increase in crosslinking density and to a stable incorporation of the carbon-based additive into the continuous phase during the curing process without having a negative influence on other properties of the anticorrosion composition such as flexibility and adhesion, thus resulting in the observed outstanding corrosion resistance and chemical resistance of the substrates prepared according to the inventive process.

Furthermore, the surface modification (i.e. physical modification), especially the surface functionalization, of the carbon-based additives also renders it possible to purposefully select the functional groups present on the surface of the carbon-based additives in regard to the respective continuous phase, so that the outstanding performance of the anticorrosion composition used according to the invention is obtained, i.e. irrespective of the continuous phase. This allows the use of a large number of different continuous phases in the form of binding agents, especially organic resins, and therefore renders the present invention applicable to a broad range of binding agents, especially organic resins, commonly used in order to prepare anticorrosion coatings.

Additionally, the carbon-based additives have a significantly reduced density if compared to commonly used corrosion inhibitors like metallic zinc or chromate compounds. The low density of the carbon-based additives in combination with the low amounts of the carbon-based additives present in the anticorrosion coating result in a significant reduction of the total (net) weight of the anticorrosion coating of up to 50 % if compared to anticorrosion coatings of the prior art. Thus, also the substrate comprising the anticorrosion coating and prepared according to the inventive process possess a significantly reduced weight if compared to substrates coated with anticorrosion coatings of the prior art. Since this weight reduction is associated with equal or even better corrosion resistance if compared to anticorrosion coatings comprising chromate or zinc corrosion inhibitors, the inventive process is particularly useful for providing substrates with excellent corrosion resistance or anticorrosion properties as well as with a significantly reduced overall weight of the substrate prepared according to the invention.

The terms "corrosion resistance" and "anticorrosion properties" as used according to the present invention are to be understood in a broad manner. Especially, the above terms are to be understood in the sense that the speed of the measurable or analyzable changes in the properties or a deterioration of a substrate or material due to an corrosive attack is at least slowed down in a way such that a damage to the substrate or material can be prevented for an extended time period and especially at least during the lifetime of the substrate or the material as such.

Furthermore, the term "analogous carbon allotropes" as used according to the present invention is to be understood in the sense that this term especially denotes different modifications of carbon having the same chemical composition but which can be distinguished from one another by different lattice structures. Specific examples for such analogous carbon allotropes are giving in the following.

The concept of the dispersing agent - also designated, synonymously, as dispersant, dispersing additive, wetting agent etc. - as used in the context of the present invention designates, in general, substances which facilitate the dispersing of particles in a dispersion medium, especially by lowering the interfacial tension between the two components - particles to be dispersed, on the one hand, and dispersing agent, on the other hand - and thus inducing wetting. Consequently, there exists a great number of synonymous designations for such dispersing agents (dispersants), examples for such synonymous designations being dispersing additive, antisettling agent, wetting agent, detergent, suspending or dispersing assistant, emulsifier etc. The concept of the dispersing agent thus differs from the concept of the dispersion medium since the latter designates the continuous phase of the dispersion (i.e. the liquid or solid, continuous dispersion medium). In the context of the present invention, the dispersing agent, additionally, serves the purpose of stabilizing the dispersed particles as well (i.e. the carbon-based additives), i.e. of holding them stably in dispersion, and of avoiding or at least minimizing their reagglomeration in an efficient way; this in turn leads to the desired viscosities of the resulting dispersions, since, in this way, readily manageable fluid systems result in practice even in the case of high concentrations of the dispersed carbon-based additives. Without the use of the dispersing agent, in contrast, there would be an increase in the viscosity of the resulting dispersions, as a result of unwanted reagglomeration of the dispersed carbon-based additives, so that - at least at relatively high concentrations of the carbon-based additives - in practice no longer manageable systems would result, especially since those systems would have too high a viscosity or too low a fluidity.

With regard to the concept of the dispersion, as it is used in the context of the present invention, reference may be made in particular to German standard DIN 53900 of July 1972, according to which the concept of the dispersion is a designation for a system (i.e. disperse system) of two or more phases, of which one phase is continuous (namely the dispersion medium) and at least one further phase is finely divided (namely the dispersed phase or the dispersoid; in the present case: the carbon-based additive). In the context of the present invention, the concept of the dispersion is used especially in the sense of suspensions, i.e. dispersions of insoluble particulate solids in liquids.

For further details relating to the terms "dispersoid", "dispersing", "dispersant", "disperse systems" and "dispersion", reference may be made, for example, to Römpp Chemielexikon, 10th edition, Georg Thieme Verlag, Stuttgart/New York, Volume 2, 1997, pages 1014/1015, and also to the literature referred to therein, the entire disclosure content of which is hereby incorporated by reference.

A particular feature of the process of the invention is to be seen in the fact that, in accordance with the invention, the corrosion resistance or anticorrosion properties provided to a substrate by the inventive process are achieved by using an anticorrosion composition containing only small amounts of non-toxic carbon-based additives, such as carbon nanotubes (CNTs) or analogous carbon allotropes, without negatively influencing the other properties of the anticorrosion composition such as flexibility and adhesion.

Moreover, the carbon-based additives present in the anticorrosion composition used according to the inventive process further enhance the adhesion of the anticorrosion composition to the substrate, thus providing outstanding corrosion resistance or anticorrosion properties and chemical resistance even if the carbon-based additives are used in only small amounts of up to 5 % by weight.

Furthermore, the relatively small amounts of the carbon-based additive in combination with the low density of the carbon-based additive result in anticorrosion compositions and coatings according to the invention with a drastically reduced weight of up to 50 % if compared to anticorrosion compositions and coatings of the prior art, while at the same time providing equal or even better corrosion resistance as the prior art anticorrosion coatings comprising metallic zinc or chromate compounds.

In the context of the process of the invention, it is possible to use any substrate which is susceptible to corrosion may comprise or consist of at least one metal susceptible to corrosion, especially selected form the group consisting of iron, copper, zinc, aluminum, silver, titanium, tin as well as mixtures, combinations and alloys thereof.

Particularly, the substrate used in accordance with the inventive process may comprise or consist of, for example, iron, steel, stainless steel, brass, aluminum, copper as well as mixtures, combinations and alloys thereof.

In general, the substrate used in accordance with the invention may be a metal, metal mixture, metal composite or alloy which is susceptible to corrosion such as oxidation, pitting corrosion, rusting, crevice corrosion and the like. In particular, the at least one metal, metal mixture, metal composite or alloy may be selected from the group consisting of iron, steel, aluminum, dye-cast-aluminum, dye-cast-alloys, magnesium-aluminum-alloys as well as mixtures and combinations thereof.

The inventive process is especially suitable for substrates such as technical or electronic components, parts, structural members or the like, which are especially used in the automotive, aircraft, transportation, construction, computer or electronic industry and sector, respectively. For, damages due to corrosion in any structural components used in the automotive, aircraft, construction, computer or electronic industry will lead to structural failures, such failures drastically decreasing the lifetime of the structural components, therefore leading to high economic costs. Furthermore, failures of structural elements due to corrosion also cause a great safety risk, especially in the automotive, aircraft and construction sector, since the failure of a structural element due to corrosion may lead to a fatal failure of the overall construction.

In order to provide a substrate with efficient corrosion resistance or corrosion properties, the substrate to be treated with the anticorrosion composition is preferably contacted and/or coated with the anticorrosion composition, especially over the entire surface.

According to another embodiment of the invention, the anticorrosion composition may be applied onto at least one surface of the substrate to be treated, especially over the entire surface. Applying the anticorrosion composition according to the inventive process to the substrate, especially over the entire surface, leads, on the one hand, to increased corrosion resistance or anticorrosion properties of the respective substrate and, on the other hand, ensures that the anticorrosion properties are provided over the complete surface of the substrate, so that corrosion cannot occur at areas of the metal where the anticorrosion composition is not applied.

Particularly good results are achieved according to the invention when the step of treating a surface of the substrate at least partially with an anticorrosion composition used in the inventive process is carried out as a coating treatment, especially over the entire surface. The coating treatment ensures that the surface of the substrate, especially the entire surface of the substrate, is homogeneously covered with the anticorrosion composition, so that the enhanced corrosion resistance or anticorrosion properties of the substrate is observed over the entire surface while on the same time minimizing the risk of uncoated areas of the metal where corrosion might occur and/or minimizing the risk of insufficient thicknesses of the anticorrosion composition.

In general, the thickness of the anticorrosion composition used according to the inventive process can vary within wide ranges. In particular, the thickness of the anticorrosion composition is in the range from 0.1 to 1,000 µm, particularly in the range from 0.5 to 900 µm, preferably in the range from 1 to 800 µm, more preferably in the range from 5 to 700 µm, even more preferably in the range from 10 to 600 µm, most preferably in the range from 20 to 500 µm. The aforementioned thickness ensures an efficient corrosion resistance or sufficient anticorrosion properties of the substrates treated according to the inventive process.

Moreover, also the weight per unit area of the anticorrosion composition used according to the inventive process can vary within wide ranges. In particular, the anticorrosion composition is used and/or applied in amounts in the range from 0.1 to 1,000 g/m², particularly in the range from 1 to 750 g/m², preferably in the range from 5 to 600 g/m², more preferably in the range from 10 to 500 g/m², even more preferably in the range from 25 to 400 g/m², most preferably in the range from 50 to 350 g/m².

According to the invention, the anticorrosion composition used in the inventive process comprises the continuous phase, based on the anticorrosion composition, in an amount from 3 to 99.999 % by weight, particularly in an amount from 20 to 99.999 % by weight, more particularly in an amount from 50 to 99.999 % by weight, even more particularly in an amount from 55 to 99.9 % by weight, especially in an amount from 60 to 99.5 % by weight, preferably in an amount from 65 to 99 % by weight, more preferably in an amount from 70 to 98 % by weight, even more preferably in an amount from 75 to 97 % by weight, most preferably in an amount from 80 to 95 % by weight. The use of the continuous phase in the aforementioned amounts ensures the presence of sufficient continuous phase in order to completely cover the surfaces of all solid compounds present in the anticorrosion composition since insufficient amounts of continuous phase might lead to air voids in the anticorrosion composition which could affect the properties of the anticorrosion composition, especially with respect to mechanical, thermal, transport and/or optical properties.

According to the inventive process, significantly enhanced corrosion resistance or anticorrosion properties of the substrates may particularly be observed even if only small amounts of carbon-based additive are used. The anticorrosion composition comprises the carbon-based additive, based on the anticorrosion composition, in an amount from 0.001 to 4 % by weight, particularly in an amount from 0.005 to 3 % by weight, preferably in an amount from 0.01 to 2 % by weight, more preferably in an amount from 0.015 to 1 % by weight, even more preferably in an amount from 0.02 to 0.5 % by weight, most preferably in an amount from 0.02 to 0.1 % by weight, very most preferably in an amount from 0.02 to 0.0999 % by weight.

It was surprisingly found out by applicant that small amounts of up to 5 % by weight of carbon-based additives are sufficient in order to achieve excellent corrosion resistance or anticorrosion properties of substrates prepared according to the inventive process. Additionally, a significant increase in the flexibility of the continuous phase is observed even if small amounts of only 0.01 % by weight carbon-based additives, based on the anticorrosion composition, are used in the inventive process. The observed increase in flexibility also leads to a superior adhesion and co-adhesion of the anticorrosion composition to the surface of the substrate, thus resulting in the increased corrosion resistance or anticorrosion properties of the substrates provided by the inventive process. Additionally, the carbon-based additives used according to the invention also have lower densities if compared to commonly used corrosion inhibitors like zinc or chromate. Thus, in combination with the small amounts of the carbon-based additives present in the inventive anticorrosion composition, a significant reduction of the weight of the anticorrosion composition of up to 50 % if compared to anticorrosion compositions of the prior art results without affecting the outstanding corrosion resistance of the anticorrosion composition used in the inventive process.

According to a preferred embodiment of the present invention, the anticorrosion composition used in the inventive process may comprise the carbon-based additive, based on the anticorrosion composition, in an amount of at least 0.001 % by weight, particularly in an amount of at least 0.002 % by weight, preferably in an amount of at least 0.005 % by weight, more preferably in an amount of at least 0.01 % by weight.

According to another preferred embodiment of the present invention, the anticorrosion composition may preferably comprise the carbon-based additive, based on the anticorrosion composition, in an amount of less than 0.1 % by weight (i.e. excluding the indicated value 0.1 % by weight, i.e. < 0.1 % by weight).

At carbon-based additive concentrations above the aforementioned upper limits, an effect of overdose may be observed under specific circumstances, i.e. only certain concentrations of carbon-based additives in the anticorrosion composition may provide effective corrosion resistance or anticorrosion properties, whereas the use of excessive amounts of carbon-based additive may lead to decreased corrosion resistance or anticorrosion properties of the resulting substrate.

According to a further embodiment of the present invention, the anticorrosion composition may comprise the dispersing agent, based on the anticorrosion composition, in an amount from 0.001 to 15 % by weight, particularly in an amount from 0.002 to 10 % by weight, preferably in an amount from 0.005 to 5 % by weight, more preferably in an amount from 0.01 to 2 % by weight, even more preferably in an amount from 0.02 to 1 % by weight.

By using a dispersing agent in the indicated amounts, the carbon-based additives are efficiently dispersed in the continuous phase, thus resulting in homogeneous and long-term stable dispersions. The homogeneous dispersion of the carbon-based additives is advantageous in order to achieve the outstanding corrosion resistance or anticorrosion properties of the substrates by using the anticorrosion composition according to the inventive process. Thus, the use of dispersing agents is, on the one hand, aimed at wetting the carbon-based additives in order to ensure easier and more gentle uncoiling, thus avoiding a chemical modification of the used carbon-based additives (which chemical modification leads to undesired defects in the sp²-backbone of the carbon-based additives), and, on the other hand, at stabilizing the separated carbon-based additive particles by coating or functionalizing the carbon-based additives with the dispersing agent, namely with the consequence that a stable and homogeneous incorporation of the carbon-based additive in the anticorrosion compositions results.

Typically, the continuous phase of the anticorrosion composition used according to the inventive process may comprise or constitute a matrix, especially a matrix for the remaining ingredients, especially the carbon-based additives and further components/ingredients. This matrix allows the carbon-based additives and further ingredients to be completely incorporated, so that the presence of air voids caused by insufficient contact with or wetting of the carbon-based additive and further ingredients is avoided or at least diminished. In contrast, the presence of air voids in the anticorrosion composition would otherwise result in reduced anticorrosion properties.

The continuous phase used in accordance with the present invention may be, for example, selected from the group consisting of crosslinkable resins, non-crosslinkable resins as well as mixtures and combinations thereof. According to the invention, the crosslinkable or non-crosslinkable resins may be any resins suitable for the use in aqueous (waterborne), solvent-based, solvent-free or powder coating compositions, including clear coat coating compositions.

As used according to the present invention, the term "crosslinkable resin" is especially intended to include not only those resins capable of being crosslinked by application of heat but also those resins which are capable of being crosslinked without the application of heat or by other means (e.g. irradiation, chemical crosslinking etc.).

According to a particularly embodiment, the continuous phase may be present in a solid or in a liquid state under atmospheric pressure (101.325 kPa) and within a temperature range from 10 to 100 °C, especially within a temperature range from 15 to 70 °C, preferably within a temperature range from 20 to 50 °C.

In general, the continuous phase may be curable by a large number of crosslinking methods. In particular, the continuous phase may be curable by at least one method which is selected from (i) chemical methods; (ii) oxidative methods; (iii) thermal methods, especially heat; (iv) irradiation methods, especially UV-irradiation, microwave irradiation, IR-irradiation; (v) moisture; and (iv) combinations thereof. According to a particular embodiment of the present invention, the continuous phase may be curable by chemical methods.

According to a further embodiment of the present invention, the continuous phase may be selected from the group consisting of thermosetting acrylics, aminoplasts, urethanes, carbamates, carbonates, polyesters, epoxies, silicones as well as mixtures and combinations thereof. According to a particularly preferred embodiment of the present invention, the continuous phase comprises or consists of epoxies.

The term "epoxies" - according to the present invention - is especially intended to include epoxy resins, which are generally known to the skilled practitioner. In more detail, the term "epoxies" particularly refers to (i) compounds or mixtures of compounds containing more than one 1,2-epoxy group (i.e. polyepoxides), (ii) polymerized resins containing epoxy groups, (iii) polyglycidyl ethers of mononuclear polyhydric phenols such as the polyglycidyl ethers of resorcinol, pyrogallol, hydroquinone and pyrocatechol, and (iv) polyglycidyl ethers of polyhydric alcohols such as the reaction products of epichlorhydrin or dichlorohydrin with aliphatic and cycloaliphatic compounds containing from two to four hydroxyl groups.

Moreover, the continuous phase may also be selected from the group consisting of at least one of (i) one-component polyurethanes; (ii) two-component polyurethanes; (iii) acrylics; (iv) oil-modified urethanes; (v) long-oil alkyds; (vi) polyurethane dispersions; (vii) acrylic emulsions; (viii) epoxies; and (ix) water reducible alkyds. As indicated before, epoxies are particularly preferred.

As far as the continuous phase is further concerned, it is possible, in the context of the present invention, that the continuous phase may further comprise at least one further component, especially selected from the group consisting of (i) solvents, especially aqueous solvents, organic solvents as well as mixtures and combinations thereof; (ii) crosslinkers, especially amine-based crosslinkers; (iii) coupling agents; and mixtures and combinations thereof.
In a preferred embodiment of the claimed invention, the solvent may be selected from the group consisting of (1) alcohols, especially straight-chain, branched or cyclic, monohydric or polyhydric alcohols, such as methanol, ethanol, butanol, ethylhexanol, decanol, isotridecyl alcohol, benzyl alcohol, propargyl alcohol, oleyl alcohol, linoleyl alcohol, oxo-process alcohols, neopentyl alcohol, cyclohexanol, fatty alcohols, and diols and polyols, such as glycols; (2) ether alcohols, such as 2-methoxyethanol, monophenyl diglycol, phenylethanol, ethylene glycol, and propylene glycol; (3) hydrocarbons, such as toluene, xylene, and aliphatic and/or cycloaliphatic benzine fractions, chlorinated hydrocarbons, such as chloroform and trichloroethane; (4) ethers, especially cyclic and acyclic ethers, such as dioxane, tetrahydrofuran, and polyalkylene glycol dialkyl ethers; (5) carboxylic esters, especially monocarboxylic esters, such as ethyl acetate and butyl acetate; and dicarboxylic or polycarboxylic esters, such as dialkyl esters of C₂ to C₄ dicarboxylic acids ("dibasic esters"); (6) ether esters, especially alkylglycol esters, such as ethylglycol acetate and methoxypropyl acetate; (7) lactones, such as butyrolactone; (8) plasticizers, especially phthalates; (9) aldehydes and ketones, such as methyl isobutyl ketone, cyclohexanone, and acetone; (10) acid amides, such as dimethylformamide; (11) N-methylpyrrolidone; and also mixtures of the aforementioned solvents.

Furthermore, it is also possible according to the inventive concept to employ ionic liquids or what are known as supercritical fluids as the solvent. Water as well may constitute a suitable solvent in the context of the present invention.

In general, the amount of the solvent can vary in wide ranges. In particular, the solvent present in the continuous phase may be used in an amount from 0.1 to 90 % by weight, particularly in an amount from 0.3 to 70 % by weight, preferably in an amount from 0.6 to 50 % by weight, more preferably in an amount from 1 to 40 % by weight, even more preferably in an amount from 2 to 25 % by weight, based on the continuous phase.

According to a further embodiment of the present invention, the continuous phase may also comprise a crosslinker, which may especially be selected from the group consisting of (1) carbodiimides; (2) aziridines; (3) compounds bearing acetyl functions; (4) amines, especially aliphatic and cycloaliphatic amines; (5) compounds bearing acetal functions; (6) acrylamide derivatives; (7) water; (8) oxygen; (9) carboxylic acids; (10) alcohols; (11) azetines; (12) (poly)isocyanates; (13) photoinitiators; and also mixtures and combinations thereof. Especially, amines, preferably aliphatic and cycloaliphatic amines, are used as crosslinkers in the inventive process.

In particular, the crosslinker may be used in an amount from 1 to 60 % by weight, particularly in an amount from 5 to 50 % by weight, preferably in an amount from 10 to 40 % by weight, more preferably in an amount from 15 to 35 % by weight, based on the continuous phase. The aforementioned amounts of the crosslinker especially provide a complete curing of the anticorrosion composition used according to the inventive process, thus further increasing the outstanding anticorrosion resistance of the substrates prepared by the inventive process.

According to a further embodiment of the present invention, the continuous phase may comprise a coupling agent. The coupling agent may be selected from the group consisting of (1) silanes, especially aminosilanes; (2) silicones; (3) anhydrides; (4) combinations and mixtures thereof; especially silanes, preferably aminosilanes.

Especially, the coupling agent may be used in an amount from 0.1 to 10 % by weight, particularly in an amount from 0.5 to 8 % by weight, preferably in an amount from 1 to 7% by weight, more preferably in an amount from 2 to 6 % by weight, based on the continuous phase.

In the context of the process of the invention, it is possible to use - as the carbon-based additive - any desired kind of carbon nanotubes (CNTs). Especially, carbon nanotubes (CNTs) preparable by processes known from the prior art or else available as commercial products may be used within the inventive concept (e.g. from Bayer MaterialScience AG, Leverkusen/Germany, or from FutureCarbon GmbH, Bayreuth/Germany).

Preferably, the carbon nanotubes (CNTs) used in accordance with the invention as the carbon-based additive may be, for example, single-wall carbon nanotubes (SWCNTs or SWNTs) or multiwall carbon nanotubes (MWCNTs or MWNTs), especially 2- to 30-wall, preferably 3- to 15-wall, carbon nanotubes.

The carbon nanotubes (CNTs) used in accordance with the invention as the carbon-based additive may preferably have average internal diameters of 0.4 to 60 nm, especially 1 to 10 nm, preferably 2 to 6 nm, and/or average external diameters of 1 to 80 nm, especially 5 to 30 nm, preferably 10 to 20 nm. Moreover, the carbon nanotubes (CNTs) used in accordance with the invention as the carbon-based additive may have average lengths of 0.01 to 1.000 µm, especially 0.3 to 500 µm, preferably 0.4 to 200 µm, more preferably 1 to 100 µm, most preferably 0.5 to 30 µm.

Furthermore, the carbon nanotubes (CNTs) used in accordance with the invention as the carbon-based additive may have a tensile strength per carbon nanotube of at least 1 GPa, especially at least 5 GPa, preferably at least 10 GPa, and/or an elasticity modulus per carbon nanotube of at least 0.1 TPa, especially at least 0.5 TPa, preferably at least 1 TPa, and/or a thermal conductivity of at least 500 W/mK, especially at least 1.000 W/mK, preferably at least 2.000 W/mK, and/or an electrical conductivity of at least 10³ S/cm, especially at least 0.5 x 10⁴ S/cm, preferably at least 10⁴ S/cm.

Typically employed carbon nanotubes (CNTs) may have a bulk density in the range from 0.01 to 0.3 g/cm³, especially 0.02 to 0.2 g/cm³, preferably 0.1 to 0.2 g/cm³, and are present in the form of agglomerates or conglomerates of a multiplicity of carbon nanotubes (CNTs), especially in highly coiled form.

Carbon nanotubes (CNTs) suitable according to the present invention are in general available commercially, as for example from Bayer MaterialScience AG, Leverkusen/Germany, an example being the product series Baytubes® (e.g., Baytubes® C 150 P), or from FutureCarbon GmbH, Bayreuth/Germany, or from Nanocyl S.A., Sambreville/Belgium, or from Arkema, Paris/France.

According to the present invention, the analogous carbon allotropes are selected from the group consisting of (i) optionally modified graphites, especially at least partially oxidized and/or fully or partially intercalated graphites or exfoliated graphites; (ii) optionally modified graphenes, especially monolayered or multilayered graphenes (*few layer graphenes*), graphene ribbons and doped graphenes; (iii) fullerenes, especially C₆₀-fullerenes, C₇₀-fullerens, C₇₆-fullerenes, C₈₀-fullerenes, C₈₂-fullerenes, C₈₄-fullerenes, C₈₆-fullerenes, C₉₀-fullerenes, C₉₄-fullerenes, preferably C₆₀-fullerenes and C₇₀-fullerenes; (iv) carbon blacks; (v) carbon fibers; (vi) optionally modified carbon nanohorns (CNHs), especially single-wall, double-wall and multiwall carbon nanohorns (CNHs); (vii) carbon nanocones (CNCs); (viii) onion-like carbons (OLCs); and (ix) mixtures and combinations thereof.

The carbon-based additives in form of analogues carbon allotropes may optionally be functionalized, especially surface-functionalized and/or surface-modified. Functionalization methods for this purpose are generally known to the skilled practitioner, so that no further explanations are necessary.

The carbon-based additives used in the inventive process in the form of (i) optionally modified graphites may be natural or artificial graphites.

In respect to (i) the optionally modified graphites, these graphites may have an average particle diameter, especially an average particle diameter D50, based on the width of the discrete graphite particles, in the range from 0.01 µm to 100 µm, especially in the range from 0.1 µm to 50 µm, preferably in the range from 1 µm to 30 µm.

In this regard (i) the optionally modified graphites may have an average particle diameter, especially an average particle diameter D50, based on the height of the discrete graphite particles, in the range from 0.5 nm to 1,000 nm, especially in the range from 1 nm to 500 nm, preferably in the range from 5 nm to 100 nm.

The determination of the particle size, in general, can be performed with measurements well known to the skilled practitioner. Especially, the particle sizes can, in general, be determined with measurements on the basis of X-ray and/or laser diffractometry as well as by using light microscopy or electron microscopy or the like. In particular, the aforementioned sizes of the carbon-based additives are based on an essentially spherical basis structure of the carbon-based additive. In case that the aforementioned carbon-based additives are deviating from the spherical basis structure or the sphere, the aforementioned sizes can be referred to an assumed sphere, which has an identical volume if compared to the carbon-based additive which is deviating from the sphere. In this regard, it is especially referred to Rawle, A., "Basic Principles of Particle-Size Analysis", Surface Coatings International, Part A, Issue 2003/02*.* It is further referred to the following statements concerning the size determination of the specific carbon-based additives.

Moreover, (i) the optionally modified graphites may have a specific surface area (BET surface) in the range from 10 m²/g to 2,000 m²/g, especially in the range from 15 m²/g to 1,800 m²/g, preferably in the range from 20 m²/g to 1,700 m²/g, more preferably in the range from 50 m²/g to 1,600 m²/g.

The determination of the specific surface area according to BET is, in general, known to the skilled practitioner. All BET values can be determined according to German standard DIN ISO 9277: 2003-05, "Determination of Specific Surface Areas of Solids by Gas Adsorption Using the BET-Method (ISO 9277: 1995)". For further details relating to the determination of the BET surface or the BET method, reference may also be made to Römpp Chemielexikon, 10th edition, Georg Thieme Verlag, Stuttgart/New York, Keyword "BET method", including the literature referred therein, and also to Winnacker-Küchler (3rd edition), Volume 7, pages 93 ff. as well as to Z. Anal. Chem., 238, pages 187 to 193 (1968). Furthermore, it is referred to the scientific publication according to S. Brunauer, P. H. Emmett, E. Teller: "Adsorption of gases in multimolecular layers", Journal of the American Chemical Society, 60, No. 2, 1938, pages 309 to 319.

Moreover, (ii) the optionally modified graphenes may be used in the form of multilayered graphenes. In this regard, the graphenes may have up to 100 layers, especially 1 to 100 layers, preferably 1 to 50 layers, more preferably 1 to 30 layers, even more preferably 1 to 20 layers, most preferably 1 to 10 layers.

According to the invention, the used (i) graphites as well as (ii) the used graphenes may, independently from one another, have an oil absorption in the range of 10 to 750 ml/100g, especially 15 to 600 ml/100g, preferably in the range of 20 to 500 ml/100g. The oil adsorption number *(Oil Adsorption Number)* may in general be determined according to ISO 4656: 2012 or according to the corresponding ASTM-method ASTM D2414, respectively.

The determination of the size of (i) the discrete graphite particles or (ii) the discrete graphene particles is especially determined by using high resolution transmission electron microscopy or scanning electron microscopy. Since the high resolution transmission electron microscopy and the scanning electron microscopy are imaging techniques, the discrete particles can be measured accordingly.

According to a further embodiment of the present invention, (iii) the fullerenes may have particles diameters in the range from 7 A to 15 A. The particle diameter corresponding to 7 A especially relates to the C₆₀-fullerene. Higher fullerenes have a corresponding larger diameter.

Moreover, (iv) the carbon blacks as used in the anticorrosion composition may be present in the form of aggregates, which are comprised of a large number of discrete particles. These aggregates may further develop widely spread networks.

According to a further embodiment of the present invention, (iv) the carbon blacks, especially the primary particles of the carbon black, may have an average particle size, especially an average particle size D50, in the range from 1 nm to 1,000 nm, preferably in the range from 5 nm to 800 nm, more preferably in the range from 10 nm to 500 nm. In this regard, the abovementioned particle diameters of the carbon blacks are related to the discrete particles of primary particles of the aggregates forming the carbon blacks. The size determination may especially be performed on the basis of scanning electron microscopy measurements.

Furthermore, (iv) the carbon blacks may have a specific surface area (BET surface) in the range from 10 m²/g to 2,000 m²/g, especially in the range from 15 m²/g to 1,800 m²/g, preferably in the range from 20 m²/g to 1,700 m²/g, more preferably in the range from 50 m²/g to 1,600 m²/g. In regard to the respective analysis methods, it is referred to the aforementioned explanations.

Finally, (iv) the carbon blacks may have an oil adsorption in the range from 10 to 500 ml/100 g, especially in the range from 15 to 450 ml/100 g, preferably in the range from 20 to 400 ml/100 g. The determination of the oil adsorption is also performed on the basis of ISO 4656: 2012 or ASTM D2414, respectively.

According to another embodiment of the present invention, (v) the carbon fibers may have an average fiber diameter, especially an average fiber diameter D50, in the range from 1 µm to 20 µm, preferably in the range from 2 µm to 15 µm, more preferably in the range from 3 µm to 10 µm. Especially, (v) the carbon fibers may have an average fiber length, especially an average fiber length D50, in the range from 20 µm to 500 µm, preferably in the range from 30 µm to 400 µm, more preferably in the range from 50 µm to 300 µm. The size determination of the carbon fibers is, for example, determined by using methods on the basis of scanning electron microscopy. Furthermore, also the BET method may be used for the size determination of the carbon fibers.

Moreover, (v) the carbon fibers may have a specific electrical resistance p in the range from 10⁻³ Ω·m to 10⁻⁷ Ω·m, especially in the range from 10⁻⁴ Ω·m to 10⁻⁶ Ω·m.

Typically, (vi) the carbon nanohorns (CHNs) may have average lengths in the range from 10 to 100 nm, preferably in the range from 20 to 80 nm, more preferably in the range from 40 to 50 nm. Moreover, (vi) the carbon nanohorns (CHNs) may have average diameters in the range from 0.5 to 10 nm, especially in the range from 1 to 8 nm, preferably in the range from 1.5 to 5 nm, more preferably in the range from 2 to 3 nm. In regard to the size determination, it is referred to the aforementioned explanations.

Especially, (vi) the carbon nanohorns (CHNs) may have a specific surface area (BET surface) in the range from 10 m²/g to 1,500 m²/g, especially in the range from 15 m²/g to 1,000 m²/g, preferably in the range from 20 m²/g to 800 m²/g, more preferably in the range from 50 m²/g to 500 m²/g. In regard to the respective analysis methods, it is referred to the aforementioned explanations.

Additionally, (vii) the carbon nanocones (CNCs) may have an at least essentially conical shape and/or may be tapered. Preferably, the ratio of the base diameter to the height of the carbon nanocones (CNCs) may be in the range of about 1.

Moreover, (viii) the onion-like carbons (OLCs) may have an at least essentially conical shape. Furthermore, (viii) the onion-like carbons (OLCs) may have average particle diameters, especially average particle diameters D50, in the range from 5 nm to 50 nm, particularly in the range from 5 nm to 30 nm, more particularly in the range from 10 nm to 20 nm. In regard to the size determination, it is also referred to the aforementioned explanations.

According to a further embodiment of the present invention, the carbon-based additive may be incorporated and/or may be used in the form of a dispersion within the anticorrosion composition. The use of already dispersed carbon-based additives allows for a simple and fast homogeneous distribution of the already dispersed carbon-based additives in the anticorrosion composition. As already mentioned before, the homogeneous distribution of the carbon-based additives is important in order to achieve the enhanced corrosion resistance or anticorrosion properties of metallic substrates provided according to the inventive process. The dispersion of carbon-based additives is obtainable, e.g. by the method described in WO 2008/058589 A2 and US 2010/059720 A1, the full content of which is hereby incorporated by reference.

Such dispersions of carbon-based additives, such as carbon nanotubes (CNTs), are also commercially available, e.g. from BYK-Chemie GmbH, Wesel/Germany.

Especially, the dispersion of the carbon-based additive may be obtained by dispersing the carbon-based additive, especially without prior pretreatment of the carbon-based additive, in a continuous phase, especially in at least one dispersion medium, in the presence of at least one dispersing agent (dispersant), especially with introduction of an energy input sufficient for dispersing. With regard to the concept of the dispersion of the carbon-based additive, the concept of the dispersing agent and for further details, it is referred to the aforementioned explanations. In this regard, the continuous phase used for preparing the dispersion of carbon-based additives may be identical to the continuous phase used for preparing the anticorrosion composition. Preferably, the continuous phase for preparing the dispersion of carbon-based additive may be different from the continuous phase used for preparing the anticorrosion composition. Especially, the continuous phase used for preparing the dispersion of the carbon-based additive is selected from solvents, especially aqueous solvents, organic solvents as well as mixtures and combinations thereof. In particular, the continuous phase used for preparing the dispersion of the carbon-based additive is identical to the solvent or solvents present in the continuous phase of the anticorrosion composition. The solvents preferably used as the continuous phase are described above.

In regard to the dispersion of the carbon-based additive, the carbon-based additive may be dispersed therein in amounts of 1 x 10⁻⁵ % to 30 % by weight, in particular in amounts of 1 x 10⁻⁴ % to 20 % by weight, preferably in amounts of 1 x 10⁻³ % to 10 % by weight, more preferably in amounts of 1 x 10⁻² % to 7.5 % by weight, very preferably in amounts of 1 x 10⁻¹ % to 5 % by weight, based on the resulting dispersion, in the continuous phase. Thus, according to an especially preferred embodiment of the present invention, the dispersions of carbon-based additives may contain the carbon-based additives in relatively high concentrations, so that only small amounts of the dispersions have to be added to the respective anticorrosion compositions, thus preventing an unwanted dilution of the overall anticorrosion composition, which may lead to incomplete curing and/or drying or to prolonged curing and/or drying periods.

Especially, the carbon-based additive may be dispersed by additionally using a dispersing agent (dispersant). Especially, the dispersing agent may be present in amounts of 10 % to 400 % by weight, in particular in amounts of 25 % to 350 % by weight, preferably in amounts of 50 % to 300 % by weight, more preferably in amounts of 75 % to 275 % by weight, very preferably in amounts of 100 % to 250 % by weight, based on the carbon-based additive to be dispersed. The aforementioned amounts of dispersing agent allow the effective and homogenous dispersion of the carbon-based additive without destruction of the carbon-based additive.

In respect to the dispersion of the carbon-based additive, the dispersing operation may be carried out over a period of 0.01 to 30 minutes, in particular over a period of 0.1 to 20 minutes, preferably over a period of 0.2 to 15 minutes, more preferably over a period of 0.5 to 10 minutes, very preferably over a period of 0.5 to 5 minutes, especially based on 1 g of carbon-based additive to be dispersed. Nevertheless, owing to a particular case or relative to the application, it may be necessary to deviate from the time specified above, without departing from the scope of the present invention.

Especially, in order to obtain a homogeneous dispersion of the carbon-based additive, a sufficient input of energy into the dispersion medium may be realized, which, on the one hand, should be sufficient to ensure reliable dispersing of the carbon-based additive and, on the other hand, should not be so high that a destruction of the carbon-based additive or of its structure may result. The required energy input may take place, for example, by means of ultrasound treatment. In this respect, the amount of energy introduced, calculated as energy introduced per unit quantity of carbon-based additive to be dispersed, is 5,000 to 500,000 kJ/kg, in particular 10,000 to 250,000 kJ/kg, preferably 15,000 to 100,000 kJ/kg, more preferably 25,000 to 50,000 kJ/kg.

Furthermore, in regard to the dispersion of the carbon-based additive, the dispersing operation proper may be preceded by a method step in which the carbon-based additive to be subsequently dispersed is contacted and homogenized with the continuous phase, in particular the dispersion medium, and with the dispersing agent and also with any further constituents and/or ingredients of the dispersion, and these components are homogenized with one another, especially with corresponding input of energy, preferably with stirring. The energy input required for this purpose, however, should be smaller than for the dispersing operation as such, and so a customary stirring or mixing operation may be sufficient for this purpose.

Moreover, the dispersion of the carbon-based additive may be carried out at temperatures below the boiling temperature of the continuous phase, in particular of the dispersion medium, in especially at temperatures in the range from 10 to 100 °C, preferably in the range from 15 to 70 °C. Where appropriate, it may be advantageous to carry out the dispersing operation with cooling since the energy input may result in an increase in the temperature of the resultant dispersion.

In respect to the dispersion of the carbon-based additive, the dispersing operation may be carried out without prior pretreatment of the carbon-based additive to be dispersed, in particular without prior oxidation, chemical treatment, thermal treatment, polarization or halogenation. Since a pretreatment of the carbon-based additive mostly results in the generation of defects in the sp²-backbone of the carbon additive, thus decreasing the anticorrosion properties of the anticorrosion composition comprising this carbon-based additive having defects, the carbon-based additive dispersed without prior pretreatment does substantially not show defects and therefore possesses an enhanced anticorrosion resistance if compared to carbon-based additives used in the prior art.

According to a further embodiment of the present invention, the carbon-based additive used in the inventive process may have been (physically) functionalized, especially surface-functionalized and/or surface-modified, particularly by at least one dispersing agent (dispersant). Especially, the at least one dispersing agent used for the functionalization of the carbon-based additive may be identical to the dispersing agent present in the anticorrosion composition used according to the inventive process and is described in more detail below. The functionalization of the carbon-based additive, especially the surface-functionalization of the carbon-based additive, preferably results in an increase of its interaction with the respective continuous phase by using dispersing agents comprising functional groups which are capable of interacting with the continuous phase. The dispersing agent, on the one hand, forms non-covalent bonds to the carbon-based additive, thus facilitating its dispersion without destruction or formation of defects in the backbone of the carbon-based additive. On the other hand, the functional groups of the dispersing agent may be used to maximize the interaction of the carbon-based additive to the continuous phase. This interaction may lead to an increased chemical and corrosion resistance due to the increase in crosslinking density during the curing and the stable incorporation of the carbon-based additive into the continuous phase.

According to a particular embodiment of the present invention, the carbon-based additive may be functionalized by contacting and/or treating and/or reacting the carbon-based additive with the at least one dispersing agent (dispersant), especially in presence of a dispersion medium and/or especially within a dispersion. The use of a dispersion of the carbon-based additive allows the homogenous and fast incorporation of the carbon-based additive into the continuous phase necessary to achieve the outstanding anticorrosion resistance and anticorrosion properties of the substrates prepared according to the inventive process.

In a further particular embodiment of the present invention, the functionalization of the carbon-based additive may be performed without prior pretreatment via oxidation, chemical treatment, thermal treatment, polarization nor halogenation. As already described above, the functionalization of the carbon-based additive on its outside by using a dispersing agent allows the functionalization of the surface of the carbon-based additive without destroying the sp²-backbone of the carbon-based additive since this destruction may result in decreased anticorrosion properties of the carbon-based additive in the anticorrosion composition.

In an even further particular embodiment of the present invention, the carbon-based additive may be functionalized exclusively by contacting and/or treating and/or reacting the carbon-based additive with the at least one dispersing agent (dispersant).

As far as the dispersing agent (dispersant) present in the anticorrosion composition is concerned, it may be more particularly a polymeric dispersing agent, especially a polymeric dispersing agent based on a functional polymer having an average molecular mass, preferably a number-average molecular mass, of at least 500 g/mol, preferably of at least 1,000 g/mol, more preferably of at least 2,000 g/mol. Especially, the molecular mass, especially the number-average molecular mass, may be determined by using Gel Permeation Chromatography (GPC), in particular according to German standard DIN 55672. In this respect, the dispersing agent used in the anticorrosion composition may be the same the dispersing agent used to prepare the dispersion of the carbon-based additive as described above.

Applicant has surprisingly found out that the use of dispersing agents renders it possible to significantly reduce the amount of the carbon-based additive in the anticorrosion composition but, at the same time, to preserve the outstanding anticorrosion resistance of the anticorrosion composition or coating. The significant reduction of the amount of carbon-based additive without affecting the outstanding anticorrosion resistance of the anticorrosion composition used according to the inventive process also results in significantly decreased production costs, better manageability due to the lower solid content and a significantly decreased overall weight of the substrate prepared according to the inventive process and comprising the anticorrosion composition or coating.

In particular, the dispersing agent comprises functional groups capable of interacting with the continuous phase and/or with the carbon-based additive. By a purposeful selection of the functional groups in relation to the continuous phase to be used, it is possible to obtain a higher crosslinking density without affecting other properties of the anticorrosion coating such as its flexibility or its adhesion to the substrate. The higher crosslinking density may also contribute to the outstanding corrosion resistance or anticorrosion properties as well as the chemical stability of substrates provided by the inventive process. Moreover, the functional groups also ensure the homogeneous distribution of the carbon-based additive in the continuous phase which contributes to the outstanding corrosion resistance of the anticorrosion coatings prepared according to the invention, especially since the functional groups on the surface of the carbon-based additives allow an easy and homogeneous incorporation into the continuous phase.

Additionally, the functional groups on the carbon-based additive may also improve the adhesion to the substrate, for example aluminum. Without wishing to be bound to a specific theory, the strong adhesion of the anticorrosion coating according to the invention to the substrate may be due to the existence of the functional groups of the dispersing agent on the carbon-based additive, which may bind to the surface of the metal substrate by means of secondary bonds or hydrogen bonds. Moreover, the adhesion may also be due to the fact that the functionalized carbon-based additive is present on the surface of the anticorrosion coating pointing towards the substrate. Due to charges present on the functionalized carbon-based additive, strong electrostatic interactions with the surface might result, thus leading to the observed drastically improved adhesion and therefore also to the improved anticorrosion properties of the anticorrosion coating.

According to the invention, the at least one dispersing agent is selected from the group consisting of (i) polymers and copolymers having functional groups and/or groups with pigment affinity; (ii) alkylammonium salts of polymers and copolymers; (iii) polymers and copolymers having acidic groups; (iv) comb copolymers and block copolymers, such as block copolymers having groups with pigment affinity, especially basic groups with pigment affinity; (v) optionally modified acrylate block copolymers; (vi) optionally modified polyurethanes; (vii) optionally modified and/or salified polyamines; (viii) phosphoric esters; (ix) ethoxylates; (x) polymers and copolymers having fatty acid radicals; (xi) optionally modified polyacrylates, such as transesterified polyacrylates; (xii) optionally modified polyesters, such as acid-functional polyesters; (xiii) polyphosphates; and (xiv) mixtures thereof. Furthermore, it is possible in principle to use, as dispersing agents suitable in accordance with the invention, all of the dispersants, surfactants, wetting agent etc. which are known for that purpose.

Particularly favorable are dispersing agents described in the publications WO 2008/058589 A2, DE 10 2006 055 106 A1 and US 2010/059720 A1, the respective disclosure content of which is hereby incorporated in full by reference. In a preferred way, the compounds selected as dispersing agents are especially those compounds of the kind described in publications EP 1 593 700 B1, EP 0 154 678 B1, EP 0 318 999 B1, EP 0 270 126 B1, EP 0 893 155 B1, EP 0 417 490 B1, EP 1 081 169 B1, EP 1 650 246 A1, EP 1 486 524 A1, EP 1 640 389 A1, EP 0 879 860 B1, WO 2005/097872 A1, and EP 1 416 019 A1, the respective disclosure content of which is hereby incorporated in full by reference. Particularly preferred compounds are described or defined more closely in Claims 13 to 29 of WO 2008/058589 A2 and DE 10 2006 055 106 A1, respectively, the full content of which is hereby incorporated by reference.

According to a further embodiment of the present invention, the anticorrosion composition may also comprise further ingredients, especially selected from the group consisting of (i) rheology modifiers, especially aromatic rheology modifiers; (ii) adhesion promoters, especially silanes; (iii) nanoparticles, especially inorganic, organic or organo-metallic nanoparticles; (iv) leveling agents, especially polyacrylates; (v) defoamers; (vi) emulsifiers; (vii) fillers; (viii) dyes; (ix) pigments; (x) plasticizers; (xii) stabilizers; (xiii) catalysts; and (xiv) combinations and mixtures thereof. In particular, these ingredients may be added to improve certain properties of the anticorrosion coating (e.g. to decrease the formation of foam during manufacturing and application of the anticorrosion coating).

In this regard, the further ingredients, based on the anticorrosion composition, may be used in a total amount from 0.001 to 90 % by weight, particularly in a total amount from 0.01 to 75 % by weight, preferably in a total amount from 0.1 to 50 % by weight, more preferably in a total amount from 0.15 to 25 % by weight.
In regard to the further ingredients which may be present in the anticorrosion composition, these ingredients may be, according to a further preferred embodiment of the present invention, nanoparticles. In particular, these nanoparticles may comprise or consist of at least one compound selected from the group consisting of (i) alloys; (ii) metals; (iii) metal and/or semi-metal oxides; (iv) oxide hydroxide and/or hydroxides; (v) mixtures or combinations of different alloys, metals, metal and/or semi-metal oxides, oxide hydroxides and/or hydroxides; (vi) inorganic salts; (vii) typical corrosion inhibitors; and (viii) combinations thereof, especially metal and/or semi-metal oxides.

According to a particular embodiment, these nanoparticles may also comprise or consist of at least one of ZnO, CeO₂, Al₂O₃, SiO₂, Al(O)OH, TiO₂, ZrO₂, oxide hydroxides, hydroxides, phosphates, molybdates, tungstates, vanadates, silicates, chromates, nitrites or sulfates. According to an especially preferred embodiment of the present invention, the nanoparticles used as ingredients in the anticorrosion composition are zinc oxide nanoparticles. In this regard, the combination of a carbon-based additive with nanoparticles results in a drastically decreased amount of nanoparticles necessary to obtain the same anticorrosion properties as is the case with conventional anticorrosion coatings comprising up to 20 % by weight, based on the anticorrosion coating, corrosion inhibitors like zinc phosphate. Thus, the carbon-based additive may be regarded as a so-called "effect booster" since the small amounts of carbon-based additive are leading to a drastically reduced amount of further corrosion inhibitors of up to 15 % by weight in the inventive anticorrosion compositions if compared to anticorrosion compositions of the prior art.

In particular, these nanoparticles may have diameters below 200 nm, particularly below 100 nm, preferably below 60 nm. Especially, these nanoparticles have diameters greater than 5 nm, particularly greater than 10 nm, preferably greater than 20 nm.

In order to further increase the interaction of the nanoparticles with the continuous phase and therefore to ensure their homogeneous incorporation, the nanoparticles may be reacted and/or modified and/or coated and/or contacted with at least one compound selected from the group consisting of (i) polysiloxanes, especially polydialkylsiloxanes; (ii) polymeric modifiers; (iii) organosilanes; (iv) wetting and/or dispersing additives; and (v) mixtures or combinations thereof.

Appropriate nanoparticles useful in the inventive process are particularly described in WO 2011/060050 A1, the full content of which is hereby incorporated by reference.

In addition, as further ingredients, the anticorrosion composition may also comprise microscale metal or metal oxide particles, especially metal pigments, preferably metallic zinc or zinc salts or zinc compounds, more preferably metallic zinc, zinc oxides and/or zinc phosphates.

Especially, the microscale metal or metal oxide particles can have particle sizes, especially average particle sizes D50, in the range from 0.1 to 500 µm, preferably in the range from 0.2 to 200 µm, more preferably in the range from 0.5 to 100 µm, most preferably in the range from 1 to 75 µm.

Preferably, the microscale metal or metal oxide particles can be present in an amount from 0.001 to 90 % by weight, especially in an amount from 0.01 to 85 % by weight, preferably in an amount from 0.1 to 80 % by weight.

It was surprisingly found by applicant that the presence of microscale metal or metal oxide particles significantly increases the corrosion resistance of the inventive anticorrosion compositions. Thus, a synergistic effect is observed if microscale metal or metal oxide particles are present in the inventive anticorrosion compositions.

The process according to the present invention typically results in anticorrosion compositions which are chromate-free and/or do not comprise any chromate, especially not any zinc chromate and/or strontium chromate, preferably not any hexavalent chromium. As already outlined above, the anticorrosion compositions used in the inventive process do not contain any highly toxic compounds and are thus highly ecological since the application as well as the dispersal of the substrate comprising the anticorrosion composition or coating according to the inventive process can be done without any precautionary actions as is the case with chromate containing anticorrosion compositions and coatings since the chromates used in these compositions and coatings are highly toxic and therefore require special precautions during their application and their disposal.

According to a particular embodiment of the present invention, the process step of treating the substrate with the anticorrosion composition may be followed by a drying and/or curing step, especially under heat and/or radiation treatment; especially, on behalf of such drying and/or curing step, the continuous phase may at least partially be removed and/or cured. Preferably, the drying and/or curing step is performed at temperatures in the range from 10 °C to 200 °C for 0.1 day to 14 days depending on the continuous phase and the curing agent. The drying and/or curing step of the anticorrosion composition allows the generation of a stable and resistant coating on the substrate, which is essential for providing corrosion resistance or anticorrosion properties in an outstanding manner.

In this regard, it is furthermore possible to treat the substrate comprising and/or providing the dried and/or cured anticorrosion composition with one or more further coating layers, which may optionally comprise pigments and/or fillers. In this case, the anticorrosion composition may be used as a primer, i.e. as the first layer in direct contact with the metal. The further coating layers may be, for example, a clear coat or coating layers comprising colored pigments. Moreover, the anticorrosion composition may also be applied as a topcoat, in which case the anticorrosion composition also shows excellent corrosion resistance and anticorrosion properties.

Furthermore, the present invention - according to a **second** aspect of the present invention - provides an anticorrosion composition, especially for providing a substrate, particularly a metallic substrate, with corrosion resistance and/or with anticorrosion properties, wherein the anticorrosion composition according to the invention comprises:
(i) a dispersion medium as a continuous phase in an amount from 3 to 99.999 % by weight, particularly in an amount from 20 to 99.999 % by weight, preferably in an amount from 50 to 99.999 % by weight, based on the anticorrosion composition;
(ii) at least one carbon-based additive selected from the group consisting of carbon nanotubes (CNTs) and analogous carbon allotropes as well as mixtures and combinations thereof, especially in an amount from 0.001 to 4 % by weight, based on the anticorrosion composition,
   wherein the analogous carbon allotropes are selected from the group consisting of (i) optionally modified graphites; (ii) optionally modified graphenes; (iii) fullerenes; (iv) carbon blacks; (v) carbon fibers; (vi) optionally modified carbon nanohorns (CNHs); (vii) carbon nanocones (CNCs); (viii) onion-like carbons (OLCs); and (ix) mixtures and combinations thereof;
(iii) at least one dispersing agent (dispersant) in an amount from 0.0001 to 20 % by weight, based on the anticorrosion composition,
   wherein the at least one dispersing agent is selected from the group consisting of (i) polymers and copolymers having functional groups and/or groups with pigment affinity; (ii) alkylammonium salts of polymers and copolymers; (iii) polymers and copolymers having acidic groups; (iv) comb copolymers and block copolymers; (v) optionally modified acrylate block copolymers; (vi) optionally modified polyurethanes; (vii) optionally modified and/or salified polyamines; (viii) phosphoric esters; (ix) ethoxylates; (x) polymers and copolymers having fatty acid radicals; (xi) optionally modified polyacrylates; (xii) optionally modified polyesters; (xiii) polyphosphates; and (xiv) mixtures thereof;
wherein the anticorrosion composition is a dispersion comprising the carbon-based additive dispersed in the continuous phase.

For further details concerning the anticorrosion composition according to the invention, reference may be made to the description of the first aspect of the present invention, which also applies to the inventive anticorrosion composition accordingly.

Furthermore, in accordance with a **third** aspect of the invention, the present invention refers to the use of the inventive anticorrosion composition for providing a substrate, particularly a metallic substrate, with corrosion resistance and/or with anticorrosion properties.

In this respect, the anticorrosion composition according to the invention may be used to treat at least partially at least one surface of the substrate to be treated with the anticorrosion composition. In particular, the anticorrosion composition, after being applied onto at least one surface of the substrate, may be subsequently dried and/or cured.

For further details concerning the inventive use of the anticorrosion composition of the invention, reference may be made to the description of the first and second aspects of the present invention, which also applies to the inventive use accordingly.

Moreover, there is provided by the present invention - in accordance with a **fourth** aspect of the present invention - an inventive anticorrosion coating which is obtainable by the inventive process according to the first aspect of the present invention and/or by using the anticorrosion composition according to the invention.

In regard to the anticorrosion coating of the present invention, the anticorrosion coating may comprises the carbon-based additive, based on the anticorrosion coating, in an amount from 0.001 to 4 % by weight, particularly in an amount from 0.005 to 3 % by weight, preferably in an amount from 0.01 to 2 % by weight, more preferably in an amount from 0.015 to 1 % by weight, even more preferably in an amount from 0.02 to 0.5 % by weight, most preferably in an amount from 0.02 to 0.1 % by weight, very most preferably in an amount from 0.02 to 0.0999 % by weight.

It was surprisingly found out by applicant that small amounts of up to 5 % by weight of carbon-based additive are efficient in order to achieve excellent corrosion resistance or anticorrosion properties of the anticorrosion coating. Additionally, a significant increase in the flexibility of the anticorrosion coating is observed even if small amounts of only 0.01 % by weight carbon-based additive, based on the anticorrosion coating, are used. The observed increase in flexibility also leads to a superior adhesion and co-adhesion of the anticorrosion coating to the surface of the substrate, thus resulting in the increased corrosion resistance or anticorrosion properties and chemical resistance of the anticorrosion coating. Additionally, the small amounts of carbon-based additive in combination with its low density also result in a significant reduction of the weight of the anticorrosion coating prepared according to the inventive process of up to 50 % if compared to anticorrosion coatings of the prior art without affecting the outstanding anticorrosion properties of the inventive anticorrosion coating.

For further details concerning the anticorrosion coating of the invention, reference may be made to the description of the first, second and third aspects of the present invention, which also applies to the inventive anticorrosion coating accordingly.

Further provided by the present invention - in accordance with a **fifth** aspect of the present invention - is an inventive substrate, particularly a metallic substrate, provided with corrosion resistance and/or with anticorrosion properties, which substrate is obtainable by treating at least one surface of the substrate at least partially by a process according to the present invention and/or by treating at least one surface of the substrate at least partially with an anticorrosion composition according to the present invention.

In particular, the inventive substrate may further be provided and/or coated with at least one or more further coating layers optionally comprising fillers and/or pigments. Moreover, it is also possible to apply the anticorrosion composition according to the invention as a topcoat. Also in this case, excellent anticorrosion resistance or anticorrosion properties are obtained. The further coating layers may further improve the anticorrosion resistance of the substrate by preventing damage to the anticorrosion composition due to environmental influences.

According to a further embodiment of the present invention, the layer and/or coating obtainable by the inventive process and/or by treating with the anticorrosion composition according to the invention may serve as a primer layer for the one or more further coating layers.

For further details concerning the substrate according to the present invention, reference may be made to the description of the first, second, third and fourth aspects of the present invention, which also applies to the inventive substrate accordingly.

To sum up, the inventive concept on the basis of the process for providing a substrate with corrosion resistance and/or anticorrosion properties according to the invention, the inventive anticorrosion composition, the use of the anticorrosion composition according to the invention, the anticorrosion coating obtainable by the inventive process as well as the substrate comprising the inventive anticorrosion composition exhibits the following advantages over anticorrosion compositions and coatings known in the prior art, wherein the subsequent discussion of the advantages is not by any way limiting:
According to the present invention, a significant increase of the adhesion of aqueous anticorrosion compositions and coatings with regard to the direct application on metals and/or metallic substrates is surprisingly achieved, also reducing the amount of harmful organic solvents which may be used to prepare the anticorrosion composition and coating. In contrast to the present invention, aqueous anticorrosion compositions and coatings of the prior art only possess an insufficient adhesion if compared to conventional epoxy-based anticorrosion compositions and coatings of the prior art.

Moreover, according to the present invention, a physical, especially a non-covalent surface-modification of the carbon-based additives may be performed, thus avoiding a significant decrease and/or deterioration of the mechanical, optical and electrical properties of the carbon-based additives. In contrast, any chemical, e.g. covalent surface-modification of carbon-based additives used in the prior art results in defects and disorders of the sp²-backbone of the carbon-based additives, so that significantly reduced mechanical, optical and electrical properties are obtained in the case of chemical modification.

Epoxy resins comprising a high solid content or solid-free epoxy systems normally show a significantly decreased flexibility and therefore an increased brittleness. However, the incorporation of carbon-based additives into the continuous phase, for example into epoxy resins comprising a high solid content or into solid-free epoxy systems, leads to a significant increase in the flexibility and therefore to a reduction of the brittleness of the resulting anticorrosion coating prepared according to the inventive process.

Furthermore, a dispersion of a carbon-based additive may also be used as an "effect booster" in the inventive anticorrosion compositions already comprising commonly used anticorrosion pigments like zinc phosphate, i.e. small amounts of the carbon-based additive lead to a significant reduction of the necessary amount of zinc phosphate. In this context, the amount may be reduced by 1 % to 15 % by weight, based on the anticorrosion composition. In contrast, up to 20 % by weight of anticorrosion pigments, based on the anticorrosion composition, are in general necessary in anticorrosion compositions of the prior art.

Additionally, it is also possible in the context of the invention to functionalize the respective carbon-based additives without the generation of defects in the sp²-backbone of the carbon-based additive since these defects would negatively influence the properties of the carbon-based additive as already explained in detail above.

According to the present invention, the crosslinking density may also be increased without negatively influencing other properties of the anticorrosion composition or coating, for example the flexibility. Especially, a purposefully selected dispersing agent having functional groups capable of interacting with the continuous phase may be used according to the inventive concept. For example, a dispersing agent comprising amino groups may be selected, if an epoxy resin is used as the continuous phase with the consequence that the amino groups of the dispersing agent may react with the continuous phase.

According to the present invention, the particularly chemical incorporation of the surface-modified carbon-based additives allows to obtain a higher crosslinking density in the cured anticorrosion composition, i.e. the anticorrosion coating of the present invention. The higher crosslinking density leads to an increased chemical stability and anticorrosion resistance or anticorrosion property of the respective substrate. Moreover, the chemical incorporation of the surface modified carbon-based additives also leads to a significantly increased flexibility of the inventive anticorrosion coating and therefore also to a significantly increased adhesion of the inventive anticorrosion coating to metallic substrates like aluminum. Especially, the addition of very small amounts of carbon-based additive, for example 0.01 % by weight of the carbon-based additive, based on the anticorrosion composition, leads to an increase in the flexibility of the continuous phase, for example epoxy-based polymers, which is normally only obtained with much higher amounts of fillers.

Moreover, the use of already dispersed and stabilized carbon-based additives in the inventive process allows the fast and homogenous distribution of the carbon-based additive in the continuous phase.

Finally, the significantly increased adhesion properties of aqueous anticorrosion compositions comprising carbon-based additives used in the inventive process render the use of adhesion promoters needless. In contrast, adhesion promoters are necessary in aqueous anticorrosion compositions of the prior art due to the low direct to metal adhesion of the prior art anticorrosion compositions.

Further advantages, properties, aspects and features of the present invention will become apparent from the following description of exemplary embodiments illustrated in the figures (as also referred to in the Examples of the present invention), of which:
- Fig. 1A: shows the Young modulus of anticorrosion compositions containing different amounts of the carbon-based additive in the form of carbon nanotubes (CNTs);
- Fig. 1B: shows the ultimate tensile strength (UTS) of anticorrosion compositions containing different amounts of the carbon-based additive in the form of carbon nanotubes (CNTs);
- Fig. 2A: shows the yield strength of anticorrosion compositions containing different amounts of the carbon-based additive in the form of carbon nanotubes (CNTs);
- Fig. 2B: shows the break strength of anticorrosion compositions containing different amounts of the carbon-based additive in the form of carbon nanotubes (CNTs); and
- Fig. 3: shows the elongation at break of anticorrosion compositions containing different amounts of the carbon-based additive in the form of carbon nanotubes (CNTs).

The exemplary embodiments illustrated in the figures are graphical representations of experimental data obtained for substrates coated with anticorrosion coatings comprising different amounts of a carbon-based additive and prepared according to the present invention in comparison to a respective anticorrosion coating without any carbon-based additive.

For further details concerning the abovementioned figures, it is also referred to the Examples referred to in the following, where each figure is explained in more detail.

Further embodiments, modifications, and variations of the present invention are readily evident and realizable for the skilled worker on reading the description, without departing the scope of the present invention.

The present invention is illustrated by reference to the examples which follow, but which are not intended to restrict the present invention.

### Examples:

The particular examples of the invention are described below. Various tests are performed in order to demonstrate the superior anticorrosion properties of various substrates prepared by the inventive process over substrates prepared by processes known in the prior art:

### Example A: Cross-hatch adhesion test

The cross-hatch adhesion test is performed according to the ASTM D3359 standard using the solid anticorrosion compositions described in Table 1, wherein the amount of each compound in Table 1 is given in parts based on the total anticorrosion composition. While comparative composition 1 does not contain any additional solvent, comparative composition 2 contains an equal amount of the solvent used to prepare the dispersion of the carbon-based additive in order to exclude any effect of the solvent on the adhesion properties of the resulting anticorrosion compositions.

**Table 1: Anticorrosion compositions used for cross-hatch adhesive test**

| compounds | comparative composition 1 | comparative composition 2 | inventive composition |
|---|---|---|---|
| epoxy resin¹ | 15 | 15 | 15 |
| rheology modifier² | 2 | 2 | 2 |
| curing agent³ | 6.5 | 6.5 | 6.5 |
| carbon-based additive⁴ | 0 | 0 | 0.75 |
| solvent (carrier)⁵ | 0 | 0.69 | 0 |

| | | | |
|---|---|---|---|
| ¹UPON® 828, Momentive Specialty Chemicals Inc.; ²Heloxy 62, Momentive Specialty Chemicals Inc.; ³Epikure 3370, Momentive Specialty Chemicals Inc.; ⁴1 % by weight, based on the dispersion, multiwall carbon nanotubes (MWCNTs) dispersed in tripropylene glycol diacrylate (TPGDA) further comprising at least one polymeric dispersant (polymeric dispersant prepared according to Example 7 of EP 0 154 678 A1), the CNT dispersion being provided by BYK-Chemie GmbH and produced according to WO 2008/058589 A2 and US 2010/059720 A1; ⁵TPGDA (tripropylene glycol diacrylate) | | | |

Aircraft aluminum (2024-T3), stainless steel, brass and copper are used as substrates for the cross-hatch adhesion test.

The solid anticorrosion compositions are prepared by adding all respective components in the amounts given in Table 1 to an 80 ml cup and mixing with a wooden spatula until a homogeneous mixture is obtained. The substrates are cleaned with a small amount of methyl ethyl ketone (MEK). The anticorrosion compositions are then applied onto the respective substrates at a thickness of 75 µm (corresponding to 3 mils) and allowed to cure for 7 days at room temperature, thus resulting in the respective anticorrosion coatings. Cross-hatch adhesion testing is then performed according to the ASTM D3359 standard. However, it is also possible to further coat the substrates with additional coating layers prior to cross-hatch adhesion testing. According to the ASTM D3359 standard, a lattice pattern with either six or eleven cuts in each direction is made through the respective anticorrosion coating into the substrate. After applying a pressure-sensitive adhesive tape over the lattice and subsequent removal, adhesion of each anticorrosion coating is evaluated using the following scales:

| | | |
|---|---|---|
| +++ | excellent | (ASTM D3359 classification: 5B) |
| ++ | very good | (ASTM D3359 classification: 4B) |
| + | good | (ASTM D3359 classification: 3B) |
| - | failure | (ASTM D3359 classification: 0B) |

The results obtained from the cross-hatch adhesion test on different substrates are displayed in Table 2. As can be seen, the inventive anticorrosion coatings comprising a dispersion of carbon-based additives in the form of dispersed multiwall carbon nanotubes (MWCNTs) show excellent adhesion in the cross-hatch adhesion test, even if only amounts of 0.03 % by weight solid MWCNTs, based on the anticorrosion coating, are present. Furthermore, this excellent adhesion is observed for all substrates used for the cross-hatch adhesion test. In contrast, the anticorrosion coatings of comparative Examples 1 and 2, which do not comprise any carbon-based additive, do not show sufficient adhesion and are removed by the pressure-sensitive adhesive tape over large areas (i.e. more than 50 %), thus failing in the cross-hatch adhesion test. In conclusion, the superior adhesion properties of the inventive anticorrosion coatings are exclusively due to the presence of dispersed carbon-based additive in the form of MWCNTs in the anticorrosion coatings and are achieved even if only very small amounts of solid MWCNTs are added to the respective anticorrosion composition.

**Table 2: Results for cross-hatch adhesion test**

| substrate | comparative coating 1 | comparative coating 2 | inventive coating |
|---|---|---|---|
| aircraft aluminum (2024-T3) | - | - | +++ |
| stainless steel | - | - | +++ |
| brass | - | - | +++ |
| copper | - | - | +++ |

Further inventive anticorrosion compositions are obtained by using dispersions of graphites, graphenes, fullerenes, carbon blacks, carbon fibers, carbon nanohorns (CNHs), carbon nanocones (CNCs) and onion-like carbons (OLCs) as the carbon-based additive in the inventive anticorrosion compositions described in Table 1. The cross-hatch adhesion test performed with the inventive anticorrosion coatings comprising graphites, graphenes, fullerenes, carbon blacks, carbon fibers, carbon nanohorns (CNHs), carbon nanocones (CNCs) and onion-like carbons (OLCs) resulted in comparable results as were obtained for the inventive anticorrosion coating comprising multiwall carbon nanotubes (MWCNTs).

### Example B: Chemical resistance of different anticorrosion coatings

The chemical resistance of various anticorrosion coatings is tested against jet fuel and Skydrol (advanced fire resistant aviation hydraulic fuel) using an immersion standard aerospace testing procedure (NTS).

The following solvent-based anticorrosion composition is used, wherein the amount of each compound in Table 3 is given in parts based on the total anticorrosion composition:

**Table 3: Anticorrosion composition used for chemical resistance test**

| | compounds | amounts |
|---|---|---|
| part A | epoxy resin¹ | 37.3 |
| | rheology modifier² | 6 |
| | leveling agent³ | 0.1 |
| | acrylic resin⁴ | 3.2 |
| | solvents⁵ | 16.4 |
| part B | curing agents⁶ | 19 |
| | solvents⁷ | 5.7 |
| | adhesion promoter⁸ | 1 |

| | | |
|---|---|---|
| ¹7200MIBK90, Emerald Performance Materials; ²Erisys® GE-22, Emerald Performance Materials; ³BYK-361N, BYK-Chemie GmbH; ⁴Paraloid DM-55, The Dow Chemical Company; ⁵MEK (Methyl Ethyl Ketone, 3.4 parts), MAK (Methyl n-Amyl Ketone, 9 parts), diacetone alcohol (1 part), cyclohexanone (2 parts), acetone (1 part); Ancamine 2432, Air Products and Chemicals, Inc. (4.6 parts), Ancamine 2489, Air Products and Chemicals, Inc. (10.6 parts), Epikure 3164, Momentive Specialty Chemicals Inc. (3.8 parts); ⁷Xylene (2.5 parts), n-ButOH (1.6 parts), MAK (Methyl n-Amyl Ketone,1.6 parts); ⁸Z-6020, Dow Corning Corporation | | |

According to the respective immersion standard aerospace testing procedure (NTS), aircraft aluminum (2024-T3) is used as substrate for the chemical resistance test.

The solvent-based anticorrosion compositions are prepared by mixing part A and part B according to the respective amounts given in Table 3 until a homogenous mixture is obtained. Afterwards, 4 % by weight, based on the total weight of the anticorrosion composition, of a 1 % by weight, based on the dispersion, dispersion of multiwall carbon nanotubes (MWCNTs) in TPGDA further comprising a polymeric dispersant (polymeric dispersant prepared according to Example 7 of EP 0 154 678 A1), the CNT dispersion being provided by BYK-Chemie GmbH and produced according to WO 2008/058589 A2 and US 2010/059720 A1 is incorporated under moderate shear force using, for example, a Dispermat at 2500 rpm, into the inventive anticorrosion composition. The comparative anticorrosion composition is prepared by mixing part A and part B according to the respective amounts given in Table 3 until a homogenous anticorrosion composition is obtained without further incorporation of any carbon-based additive. Once catalyzed, the respective anticorrosion composition is then applied on the aluminum substrates either by using a 50 µm (corresponding to 2 mil) wire round bar or by spraying techniques (conventional spraying techniques) such that at a dry film thickness of slightly over 25 µm (corresponding to 1 mil) results. The coated panels are then allowed to cure for 7 days at room temperature to obtain the respective anticorrosion coatings before being tested for chemical resistance against jet fluid and Skydrol. However, it is also possible to apply further coating layers, for example a clear coat, onto the anticorrosion coatings prior to testing the chemical resistance to jet fluid and Skydrol. The results are evaluated using the immersion standard aerospace testing procedure (NTS) evaluation criteria for non-chromated anticorrosion coatings:

| | |
|---|---|
| ++ | pass jet fluid ("no blistering or loss of adhesion" and minimum pencil hardness of HB after 42 days of immersion of the respective panel in jet fluid) |
| ++ | pass Skydrol (maximum reduction in pencil hardness of 2 pencils after 30 days of immersion of the respective panel in Skydrol) |
| - | failure |

The results obtained from the chemical resistance test against jet fluid and Skydrol for the two different applications methods are shown in Table 4. As can be seen, the inventive anticorrosion coatings comprising a carbon-based additive in the form of dispersed multiwall carbon nanotubes (MWCNTs) pass the chemical resistant test against jet fluid and Skydrol according to the immersion standard aerospace testing procedure (NTS), even if only small amounts of 0.06 % by weight solid MWCNTs, based on the cured anticorrosion coating, are present. The excellent results obtained for the inventive coating compositions are resulting from the excellent adhesion of the inventive anticorrosion coatings due to the incorporation of the carbon-based additive in the form of MWCNTs. Moreover, the application method does not influence the test results obtained for the inventive anticorrosion coatings since excellent chemical resistance against jet fluid and Skydrol is obtained for the inventive anticorrosion coatings, irrespective of the method of application. In contrast, the coatings not comprising any carbon-based additive (comparative coatings) do not pass the test since the coatings are nearly completely removed from the substrates even before the end of the test due to insufficient adhesion to the substrates.

**Table 4: Results for chemical resistance test**

| application technique | comparative coating | inventive coating |
|---|---|---|
| wire round bar | - (jet fluid) | ++ (jet fluid) |
| | - (Skydrol) | ++ (Skydrol) |
| conventional spraying | - (jet fluid) | ++ (jet fluid) |
| | - (Skydrol) | ++ (Skydrol) |

Further inventive anticorrosion compositions are obtained by incorporating dispersions of graphites, graphenes, fullerenes, carbon blacks, carbon fibers, carbon nanohorns (CNHs), carbon nanocones (CNCs) and onion-like carbons (OLCs) into anticorrosion compositions prepared from part A and B as described in Table 3. The chemical resistance test performed with the inventive anticorrosion coatings comprising graphites, graphenes, fullerenes, carbon blacks, carbon fibers, carbon nanohorns (CNHs), carbon nanocones (CNCs) and onion-like carbons (OLCs) resulted in comparable results as were obtained for the inventive anticorrosion coating comprising multiwall carbon nanotubes (MWCNTs).

### Example C: Corrosion resistance of different anticorrosion coatings

The corrosion resistance tests are performed according to the ASTM B117 standard using solvent-based anticorrosion compositions as described in Table 3. Furthermore, also solid anticorrosion compositions are tested for corrosion resistance by using the anticorrosion compositions as described in Table 5, wherein the amount of each compound in Table 5 is given in parts based on the total anticorrosion composition:

**Table 5: Solid anticorrosion compositions for corrosion resistance test**

| compound | comparative composition | inventive composition |
|---|---|---|
| epoxy resin¹ | 15 | 15 |
| rheology modifier² | 2 | 2 |
| curing agent³ | 6.5 | 6.5 |
| carbon-based additive⁴ | 0 | 0.5 |

| | | |
|---|---|---|
| ¹EPON® 828, Momentive Specialty Chemicals Inc.; ²Heloxy 62, Momentive Specialty Chemicals Inc.; ³Epikure 3370, Momentive Specialty Chemicals Inc.; ⁴1 % by weight, based on the dispersion, multiwall carbon nanotubes (MWCNTs) dispersed in tripropylene glycol diacrylate (TPGDA) further comprising at least one polymeric dispersant (polymeric dispersant prepared according to Example 7 of EP 0 154 678 A1), the CNT dispersion being provided by BYK-Chemie GmbH and produced according to WO 2008/058589 A2 and US 2010/059720 A1. | | |

Aircraft aluminum (2024-T3), cold-rolled steel and hot-rolled steel are used as substrates for the corrosion resistance tests.

The panels (i.e. coated substrates) coated with the solvent-based anticorrosion coatings are prepared according to the method described in Example B, whereas the panels coated with the solid anticorrosion coatings are prepared according to the method described in Example A by using the amounts shown in Table 5. Afterwards, the substrates are prepared according to ASTM B117 standard and are placed in a salt spray (fog) apparatus for 7,250 hours (corresponding to a lifetime of the panel of about 8 years). However, coating of the substrates with further coating layers is also possible prior to preparing the substrates according to ASTM B117 standard and placing them in a salt spray (fog) apparatus. The following scale is used to evaluate the corrosion resistance after the end of the salt-spay test:

| | |
|---|---|
| +++ | excellent corrosion resistance |
| ++ | very good corrosion resistance |
| + | good corrosion resistance |
| - | failure, severe corrosion of panel |

The results obtained from the corrosion resistance test on different substrates and using different anticorrosion coatings are displayed in Table 6. As can be seen, both the solid and solvent-based inventive anticorrosion coatings show excellent corrosion resistance even after prolonged times of 7,250 hours of salt-spray test. This outstanding corrosion resistance is achieved even if only very small amounts of 0.02 % by weight (solid inventive anticorrosion coating) or 0.04% by weight (solvent-based inventive anticorrosion coating) of solid MWCNTs, based on the cured anticorrosion coatings, are present. Moreover, an exceptional high gloss of the inventive anticorrosion coatings is maintained even after 7,250 hours of salt-fog test. Furthermore, the excellent anticorrosion resistance of the inventive anticorrosion coatings is achieved irrespective of the substrate used, thus rendering the inventive anticorrosion coatings applicable to a broad range of substrates. In contrast, the comparative solvent-based anticorrosion coating does show heavy corrosion after 7,250 hours of salt-fog test, thus failing in providing a sufficient corrosion resistance, whereas the comparative solid anticorrosion coating shows a nearly complete loss of adhesion over large areas, thus leading to accumulation of salt water between the substrate and the comparative anticorrosion coating layer.

**Table 6: Results from the corrosion resistant test**

| substrate | comparative solid coating | comparative solvent-based coating | inventive solid coating | inventive solvent-based coating |
|---|---|---|---|---|
| aircraft aluminum (2024-T3) | - | - | +++ | +++ |
| cold-rolled steel | - | - | +++ | +++ |
| hot-rolled steel | - | - | +++ | +++ |

Further inventive solid and solvent-based anticorrosion compositions are obtained by using dispersions of graphites, graphenes, fullerenes, carbon blacks, carbon fibers, carbon nanohorns (CNHs), carbon nanocones (CNCs) and onion-like carbons (OLCs) as the carbon-based additive in the inventive anticorrosion compositions described in Table 3 and 5. The corrosion resistance test performed with the inventive anticorrosion coatings comprising graphites, graphenes, fullerenes, carbon blacks, carbon fibers, carbon nanohorns (CNHs), carbon nanocones (CNCs) and onion-like carbons (OLCs) resulted in comparable results as were obtained for the inventive anticorrosion coating comprising multiwall carbon nanotubes (MWCNTs).

### Example D: UV-resistance and corrosion resistance of different anticorrosion coatings

The UV-resistance and corrosion resistance test of various anticorrosion coatings is performed according to the ASTM G155 and ASTM B117 standards using solid anticorrosion compositions as described in Table 7, wherein the amount of each compound in Table 7 is given in parts based on the total anticorrosion composition:

**Table 7: Anticorrosion compositions for UV-resistance and corrosion resistance test**

| compound | comparative composition 1 | inventive composition 1 | inventive composition 2 |
|---|---|---|---|
| epoxy resin¹ | 15 | 15 | 15 |
| rheology modifier² | 2 | 2 | 2 |
| curing agent³ | 6.5 | 6.5 | 6.5 |
| carbon-based additive⁴ | 0 | 1 | 1 |
| nanoparticles⁵ | 0 | 0 | 1 |

| | | | |
|---|---|---|---|
| ¹EPON® 828, Momentive Specialty Chemicals Inc.; ²Heloxy 62, Momentive Specialty Chemicals Inc.; ³Epikure 3370, Momentive Specialty Chemicals Inc.; ⁴1 % by weight, based on the dispersion, multiwall carbon nanotubes (MWCNTs) dispersed in tripropylene glycol diacrylate (TPGDA) further comprising at least one polymeric dispersant (polymeric dispersant prepared according to Example 7 of EP 0 154 678 A1), the CNT dispersion being provided by BYK-Chemie GmbH and produced according to WO 2008/058589 A2 and US 2010/059720 A1; ⁵30 % by weight, based on the dispersion, of ZnO nanoparticles (20 nm) in tripropylene glycol diacrylate (TPGDA) provided by BYK-Chemie GmbH. | | | |

Cold-rolled steel and hot-rolled steel are used as substrates for the UV-resistance and corrosion resistance test.

The solid anticorrosion compositions are prepared by adding all respective components in the amounts given in Table 7 to an 80 ml cup and mixing with a wooden spatula until a homogeneous mixture is obtained. The substrates are cleaned with a small amount of methyl ethyl ketone (MEK). The anticorrosion compositions are then applied at a thickness of 750 µm (corresponding to 30 mils) and allowed to cure for 7 days at room temperature resulting in the respective anticorrosion coatings. Panels are then prepared according ASTM standard G155, are placed in a xenon light arc apparatus operated according to ASTM standard G155 for 1,000 hours and are subsequently placed into the salt spray (fog) apparatus operated according to ASTM standard B117 for another 1,000 hours. However, it is also possible to further coat the substrates with additional coating layers prior to preparing the panels according to ASTM standard G155. After finishing the salt spray test, each panel is evaluated for corrosion resistance using the following scales:

| | |
|---|---|
| +++ | excellent corrosion resistance |
| ++ | very good corrosion resistance |
| + | good corrosion resistance |
| - | failure, severe corrosion of panel |

The results obtained from the UV-resistance and corrosion resistance test are displayed in Table 8. As can be seen, the inventive anticorrosion composition 1 comprising the carbon-based additive in the form of dispersed multiwall carbon nanotubes (MWCNTs) shows good UV-resistance and corrosion resistance if amounts of 0.04 % by weight solid MWCNTs, based on the cured anticorrosion coating, are present. However, the corrosion resistance is drastically enhanced when UV-protecting compounds in the form of ZnO nanoparticles are present in the inventive anticorrosion coating (inventive coating 2) since the ZnO nanoparticles effectively prevent the degradation of the epoxy resin used as continuous phase by UV-radiation when present in 1 % by weight, based on the cured anticorrosion coating. In contrast, the anticorrosion coating of the comparative example shows serious corrosion after the end of the test. In conclusion, the superior corrosion resistance of the inventive anticorrosion coating comprising a carbon-based additive in the form of MWCNTs is not influenced by the addition of further compounds like UV-protecting compounds in the form of ZnO nanoparticles. Thus, the properties of the inventive anticorrosion coatings can be optimized and tuned in respect to the specific environmental influences by the addition of further ingredients.

**Table 8: Results from the UV-resistance and corrosion resistance test**

| Substrate | Comparative coating | Inventive coating 1 | Inventive coating 2 |
|---|---|---|---|
| cold-rolled steel | - | + | +++ |
| hot-rolled steel | - | + | +++ |

Further inventive anticorrosion compositions are obtained by using dispersions of graphites, graphenes, fullerenes, carbon blacks, carbon fibers, carbon nanohorns (CNHs), carbon nanocones (CNCs) and onion-like carbons (OLCs) as the carbon-based additive in the inventive anticorrosion compositions described in Table 7. The UV-resistance and corrosion resistance test performed with the inventive anticorrosion coatings comprising graphites, graphenes, fullerenes, carbon blacks, carbon fibers, carbon nanohorns (CNHs), carbon nanocones (CNCs) and onion-like carbons (OLCs) resulted in comparable results as were obtained for the inventive anticorrosion coating comprising multiwall carbon nanotubes (MWCNTs).

### Example E: Flexibility of different anticorrosion coatings

The flexibility of various anticorrosion coatings is performed by using solid anticorrosion compositions as described in Table 9, wherein the amount of each compound in Table 9 is given in parts based on the total anticorrosion composition. To some anticorrosion compositions, the same amount of solvent as contained in the dispersion of the carbon-based additive is added in order to exclude any effect of the solvent on the flexibility of the resulting anticorrosion coatings. Furthermore, also the influence of different curing agents and the use of a wetting agent on the flexibility of the resulting anticorrosion coatings is determined.

**Table 9: Anticorrosion compositions for flexibility tests**

| | sample number | | | | | | | | |
|---|---|---|---|---|---|---|---|---|---|
| compound | 1 | 2 | 3 | 4 | 5 | 6 | 7 | 8 | 9 |
| epoxy resin¹ | 15 | 15 | 15 | 15 | 15 | 15 | 15 | 15 | 15 |
| rheology modifier² | 2 | 2 | 2 | 2 | 2 | 2 | 2 | 2 | 2 |
| curing agents³ | 8^{3a} | 8^{3b} | 9^{3c} | 8^{3a} | 8^{3b} | 9^{3c} | 8^{3a} | 8^{3b} | 9^{3c} |
| carbon-based additive⁴ | 0 | 0 | 0 | 0 | 0 | 0 | 0 | 0 | 0 |
| solvent⁵ | 0 | 0 | 0 | 0 | 0 | 0 | 0.69 | 0.69 | 0.69 |
| wetting additive⁶ | 0 | 0 | 0 | 0.05 | 0.05 | 0.05 | 0 | 0 | 0 |

| | sample number | | | | | | | | |
|---|---|---|---|---|---|---|---|---|---|
| compound | 10 | 11 | 12 | 13 | 14 | 15 | 16 | 17 | 18 |
| epoxy resin¹ | 15 | 15 | 15 | 15 | 15 | 15 | 15 | 15 | 15 |
| rheology modifier² | 2 | 2 | 2 | 2 | 2 | 2 | 2 | 2 | 2 |
| curing agents³ | 8^{3a} | 8^{3b} | 9^{3c} | 8^{3a} | 8^{3b} | 9^{3c} | 8^{3a} | 8^{3b} | 9^{3c} |
| carbon-based additive⁴ | 0 | 0 | 0 | 0.75 | 0.75 | 0.75 | 0 | 0 | 0 |
| solvent⁵ | 0.69 | 0.69 | 0.69 | 0 | 0 | 0 | 0 | 0 | 0 |
| wetting additive⁶ | 0.05 | 0.05 | 0.05 | 0 | 0 | 0 | 0.09 | 0.09 | 0.09 |

| | sample number | | | | | | | | |
|---|---|---|---|---|---|---|---|---|---|
| compound | 19 | 20 | 21 | 22 | 23 | 24 | 25 | 26 | 27 |
| epoxy resin¹ | 15 | 15 | 15 | 15 | 15 | 15 | 15 | 15 | 15 |
| rheology modifier² | 2 | 2 | 2 | 2 | 2 | 2 | 2 | 2 | 2 |
| curing agents³ | 8^{3a} | 8^{3b} | 9^{3c} | 8^{3a} | 8^{3b} | 9^{3c} | 8^{3a} | 8^{3b} | 9^{3c} |
| carbon-based additive⁴ | 0 | 0 | 0 | 0 | 0 | 0 | 1.25 | 1.25 | 1.25 |
| solvent⁵ | 1.15 | 1.15 | 1.15 | 1.15 | 1.15 | 1.15 | 0 | 0 | 0 |
| wetting additive⁶ | 0 | 0 | 0 | 0.09 | 0.09 | 0.09 | 0 | 0 | 0 |

| | | | | | | | | | |
|---|---|---|---|---|---|---|---|---|---|
| ¹EPON® 828, Momentive Specialty Chemicals Inc.; ²Heloxy 62, Momentive Specialty Chemicals Inc.; ^{3a}Epikure 3370, Momentive Specialty Chemicals Inc., ^{3b}Epikure 3175, Momentive Specialty Chemicals Inc., ^{3c}FB 30 Polyamide, Epoxy Chemicals Inc.; ⁴1 % by weight, based on the dispersion, multiwall carbon nanotubes (MWCNTs) dispersed in tripropylene glycol diacrylate (TPGDA) further comprising at least one polymeric dispersant (polymeric dispersant prepared according to Example 7 of EP 0 154 678 A1), the CNT dispersion being provided by BYK-Chemie GmbH and produced according to WO 2008/058589 A2 and US 2010/059720 A1; ⁵tripropylene glycol diacrylate (TPGDA); ⁶polymeric dispersant prepared according to Example 7 of EP 0 154 678 A1 | | | | | | | | | |

The solid anticorrosion compositions are prepared by adding the epoxy resin, the rheology modifier and the respective curing agent in the amounts given in Table 9 to an 80 ml cup and mixing with a wooden spatula until a homogeneous mixture is obtained. The wetting additive and the solvent can be post added to the already prepared anticorrosion composition. After thoroughly mixing in the carbon-based additive in the amounts given in Table 9, the anticorrosion compositions are poured into a plastic tray (20 grams) and allowed to cure for 7 days at room temperature to obtain the respective anticorrosion coating. The samples are then removed from the tray and evaluated for flexibility using the following scale:

| | |
|---|---|
| +++ | excellent flexibility |
| ++ | very good flexibility |
| + | good flexibility |
| - | slight flexibility |
| -- | no flexibility |

The results obtained from the flexibility test are displayed in Table 10. As can be seen, the inventive anticorrosion coatings corresponding to sample numbers 13 to 15 possess a very good flexibility which can be further increased by increasing the amount of carbon-based additive in the form of MWCNTs as can be seen for the inventive anticorrosion coatings 25 to 27. The excellent flexibility of the inventive anticorrosion coatings is obtained irrespective of the curing agent. Without wishing to be bound to a specific theory, the excellent flexibility of the anticorrosion coatings comprising multiwall carbon nanotubes (MWCNTs) as carbon-based additive may be due to the fact, that the outer walls of the MWCNTs may be fixed along with the dispersing agent used to functionalize the surface of the MWCNTs in the continuous phase, in particular the binding agent, whereas the inner walls of the MWCNTs may be able to move around. In contrast, the flexibility of the comparative anticorrosion coatings is strongly decreased if compared to the inventive anticorrosion coatings. Also the addition of an identical amount of solvent as present in the dispersion of the carbon-based additive or the addition of a wetting additive is only resulting in a negligible increase in flexibility.

**Table 10: Results from the flexibility test**

| | comparative | | | | | | | | | |
|---|---|---|---|---|---|---|---|---|---|---|
| sample number | 1 | 2 | 3 | 4 | 5 | 6 | 7 | 8 | 9 | 10 |
| flexibility | -- | -- | -- | -- | -- | -- | - | - | - | - |

| | comparative | | inventive | | | comparative | | | | |
|---|---|---|---|---|---|---|---|---|---|---|
| sample number | 11 | 12 | 13 | 14 | 15 | 16 | 17 | 18 | 19 | 20 |
| flexibility | - | - | ++ | ++ | ++ | -- | -- | -- | -- | -- |

| | comparative | | | | inventive | | | | | |
|---|---|---|---|---|---|---|---|---|---|---|
| sample number | 21 | 22 | 23 | 24 | 25 | 26 | 27 | | | |
| flexibility | - | - | - | - | +++ | +++ | +++ | | | |

Further inventive anticorrosion compositions are obtained by using dispersions of graphites, graphenes, fullerenes, carbon blacks, carbon fibers, carbon nanohorns (CNHs), carbon nanocones (CNCs) and onion-like carbons (OLCs) as the carbon-based additive in the respective anticorrosion compositions described in Table 9. The flexibility test performed with the inventive anticorrosion coatings comprising graphites, graphenes, fullerenes, carbon blacks, carbon fibers, carbon nanohorns (CNHs), carbon nanocones (CNCs) and onion-like carbons (OLCs) resulted in comparable results as were obtained for the inventive anticorrosion coating comprising multiwall carbon nanotubes (MWCNTs).

### Example F: Mechanical properties of different anticorrosion coatings

Various mechanical properties are measured according to the ASTM D638V standard using the solid anticorrosion compositions described in Table 11, wherein the amount of each compound in Table 11 is given in parts based on the total anticorrosion composition. The amount of tripropylene glycol diacrylate (TPGDA) present in each anticorrosion composition is kept constant at 2.30 parts by adding additional TPGDA where necessary, whereas the amount of the carbon-based additive is varied in each anticorrosion composition.

**Table 11: Anticorrosion compositions used for mechanical properties testing**

| | sample no. | | | | | | | | |
|---|---|---|---|---|---|---|---|---|---|
| compound | 1 | 2 | 3 | 4 | 5 | 6 | 7 | 8 | 9 |
| epoxy resin¹ | 15 | 15 | 15 | 15 | 15 | 15 | 15 | 15 | 15 |
| rheology modifier² | 2 | 2 | 2 | 2 | 2 | 2 | 2 | 2 | 2 |
| curing agent³ | 8 | 8 | 8 | 8 | 8 | 8 | 8 | 8 | 8 |
| carbon-based additive⁴ | 0 | 0.25 | 0.50 | 0.75 | 1.00 | 1.25 | 1.50 | 1.75 | 2.00 |
| carbon-based additive in composition | 0 | 0.02 | 0.04 | 0.06 | 0.08 | 0.10 | 0.12 | 0.14 | 0.16 |

| | sample no. | | | | | | | | |
|---|---|---|---|---|---|---|---|---|---|
| compound | 10 | 11 | | | | | | | |
| epoxy resin¹ | 15 | 15 | | | | | | | |
| rheology modifier² | 2 | 2 | | | | | | | |
| curing agent³ | 8 | 8 | | | | | | | |
| carbon-based additive⁴ | 2.25 | 2.50 | | | | | | | |
| carbon-based additive in composition | 0.18 | 0.20 | | | | | | | |

| | | | | | | | | | |
|---|---|---|---|---|---|---|---|---|---|
| ¹EPON® 828, Momentive Specialty Chemicals Inc.; ²Heloxy 62, Momentive Specialty Chemicals Inc.; ³Epikure 3370, Momentive Specialty Chemicals Inc.; ⁴1 % by weight, based on the dispersion, multiwall carbon nanotubes (MWCNTs) dispersed in tripropylene glycol diacrylate (TPGDA) further comprising at least one polymeric dispersant (polymeric dispersant prepared according to Example 7 of EP 0 154 678 A1 the CNT dispersion being provided by BYK-Chemie GmbH and produced according to WO 2008/058589 A2 and US 2010/059720 A1. | | | | | | | | | |

The solid anticorrosion compositions are prepared by adding the respective amounts given in Table 11 to an 80 ml cup and mixing with a wooden spatula until a homogeneous mixture is obtained. The anticorrosion composition is then poured into a dogbone mold and allowed to cure for 7 days at room temperature to obtain the respective anticorrosion coating. The Young's modulus, the yield strength, the ultimate yield strength (UTS) as well as the break strength of the anticorrosion coatings are then tested by using a Micro EP universal testing machine (ADMET) with a grip distance of 35 mm and a tensile speed of 2 mm/min. Moreover, the elongation at break is also determined for all anticorrosion coatings.

Further inventive anticorrosion compositions are obtained by using dispersions of graphites, graphenes, fullerenes, carbon blacks, carbon fibers, carbon nanohorns (CNHs), carbon nanocones (CNCs) and onion-like carbons (OLCs) as the carbon-based additive in the anticorrosion compositions described in Table 11. The mechanical properties obtained for the inventive anticorrosion coatings comprising graphites, graphenes, fullerenes, carbon blacks, carbon fibers, carbon nanohorns (CNHs), carbon nanocones (CNCs) and onion-like carbons (OLCs) are comparable to the mechanical properties obtained for the inventive anticorrosion coatings comprising multiwall carbon nanotubes (MWCNTs).

### Description of the Figures

In Figure 1A, the results obtained for the Young modulus of anticorrosion coatings comprising different amounts of a carbon-based additive in the form of multiwall carbon nanotubes (MWCNTs) are depicted. In general, the addition of the carbon-based additive to the anticorrosion coatings leads to an initial decrease in the Young modulus. However, at concentrations below 0.10 % by weight, based on the cured anticorrosion coating, of solid carbon-based additive in the anticorrosion coating, a significant increase in the Young modulus is observed. At amounts of 0.10 % by weight, based on the cured anticorrosion coating, of solid carbon-based additive, the Young modulus is again decreased. This decrease is an indication for an effect of overdose starting at concentrations of 0.10 % by weight, based on the cured anticorrosion coating, of the carbon-based additive. Thus, the increase in the Young modulus is only observed in a specific region below 0.10 % by weight, based on the cured anticorrosion coating, of the solid carbon-based additive. Therefore, it is especially preferred according to the present invention to use anticorrosion compositions comprising the carbon-based additive in amounts below 0.10 % by weight. However, it is also possible in the context of the present invention, to use anticorrosion compositions comprising the carbon-based additives in amounts over 0.10 % by weight.

In Figure 1 B, the results obtained for the ultimate yield strength (UTS) of anticorrosion coatings comprising different amounts of a carbon-based additive in the form of multiwall carbon nanotubes (MWCNTs) are depicted. In principle, the same results obtained for the Young modulus are also obtained for the ultimate yield strength (UTS) of different anticorrosion coatings, i.e. after an initial decrease of the ultimate yield strength (UTS), the ultimate yield strength (UTS) is increased at concentrations of the carbon-based additive of below 0.10 % by weight, based on the cured anticorrosion composition, and decreased at concentrations of at least 0.10 % by weight carbon-based additive, based on the cured anticorrosion composition. Thus, also in case of the results obtained for the ultimate yield strength (UTS) an increase is only observed in a specific region below 0.10 % by weight, based on the cured anticorrosion coating, of the solid carbon-based additive. Therefore, it is especially preferred according to the present invention to use anticorrosion compositions comprising the carbon-based additive in amounts below 0.10 % by weight. However, in general, it is also possible in the context of the present invention, to use anticorrosion compositions comprising the carbon-based additives in amounts of equal to or more than 0.10 % by weight.

In Figures 2A and 2B, the results obtained for the yield strength and the break strength, respectively, of anticorrosion coatings comprising different amounts of a carbon-based additive in the form of multiwall carbon nanotubes (MWCNTs) are depicted. The same trends as described for the Young modulus and the ultimate yield strength (UTS) are also obtained for the yield strength and the break strength. Thus, at concentrations of equal to or of more than 0.10 % by weight of carbon-based additive, based on the cured anticorrosion coating, a significant decrease in both the yield strength and in the break strength is observed, whereas concentrations below 0.10 % by weight, based on the cured anticorrosion coating, of carbon-based additive results in an increase of the yield strength and the break strength. Therefore, it is especially preferred according to the present invention to use anticorrosion compositions comprising the carbon-based additive in amounts below 0.10 % by weight. However, as defined above, it is also possible in the context of the present invention to use anticorrosion compositions comprising the carbon-based additives in amounts of equal to or of more than 0.10 % by weight.

In Figure 3, the results obtained for the elongation at break for various anticorrosion coatings comprising different amounts of a carbon-based additive in the form of multiwall carbon nanotubes (MWCNTs) are shown. The elongation at break can be increased by the addition of the carbon-based additive and, furthermore, reaches a plateau at concentrations below 0.10 % by weight of the carbon-based additive, based on the cured anticorrosion coating. Therefore, it is especially preferred according to the present invention to use anticorrosion compositions comprising the carbon-based additive in amounts below 0.10 % by weight, based on the cured anticorrosion composition, since the elongation at break cannot be increased further by using anticorrosion compositions comprising amounts of at least 0.10 % by weight of the carbon-based additive. However, in general, it is also possible in the context of the present invention to use anticorrosion compositions comprising the carbon-based additives in amounts of at least 0.10 % by weight.

### Conclusions:

In conclusion, surprisingly the purposeful addition of defined amounts of a carbon-based additive to anticorrosion compositions and coatings leads to an improvement of the mechanical properties of the anticorrosion coatings according to the present invention, whereas the mechanical properties of the anticorrosion coatings are decreased at excessive concentrations of the carbon-based additive.

To sum up, the above Examples demonstrate the outstanding properties of the inventive anticorrosion compositions on the basis of the purposeful use of a carbon-based additive.

## Claims

1. A process for providing a substrate, particularly a metallic substrate, with corrosion resistance and/or with anticorrosion properties,
wherein the process comprises the process step of treating at least one surface of the substrate at least partially with an anticorrosion composition;
wherein the anticorrosion composition comprises:
(i) a dispersion medium as a continuous phase in an amount from 3 to 99.999 % by weight, particularly in an amount from 20 to 99.999 % by weight, preferably in an amount from 50 to 99.999 % by weight, based on the anticorrosion composition;
(ii) at least one carbon-based additive selected from the group consisting of carbon nanotubes (CNTs) and analogous carbon allotropes as well as mixtures and combinations thereof in an amount from 0.001 to 4 % by weight based on the anticorrosion composition,
wherein the analogous carbon allotropes are selected from the group consisting of (i) optionally modified graphites; (ii) optionally modified graphenes; (iii) fullerenes; (iv) carbon blacks; (v) carbon fibers; (vi) optionally modified carbon nanohorns (CNHs); (vii) carbon nanocones (CNCs); (viii) onion-like carbons (OLCs); and (ix) mixtures and combinations thereof;
(iii) at least one dispersing agent (dispersant) in an amount from 0.0001 to 20 % by weight based on the anticorrosion composition,
wherein the at least one dispersing agent is selected from the group consisting of (i) polymers and copolymers having functional groups and/or groups with pigment affinity; (ii) alkylammonium salts of polymers and copolymers; (iii) polymers and copolymers having acidic groups; (iv) comb copolymers and block copolymers; (v) optionally modified acrylate block copolymers; (vi) optionally modified polyurethanes; (vii) optionally modified and/or salified polyamines; (viii) phosphoric esters; (ix) ethoxylates; (x) polymers and copolymers having fatty acid radicals; (xi) optionally modified polyacrylates; (xii) optionally modified polyesters; (xiii) polyphosphates; and (xiv) mixtures thereof;
wherein the anticorrosion composition is a dispersion comprising the carbon-based additive dispersed in the continuous phase.

2. The process according to Claim 1,
wherein the substrate comprises or consists of at least one metal susceptible to corrosion, especially selected from the group consisting of iron, copper, zinc, aluminum, silver, titanium, tin as well as mixtures, combinations and alloys thereof; and/or
wherein the substrate comprises or consists of iron, steel, stainless steel, brass, aluminum, copper as well as mixtures, combinations and alloys thereof; and/or
wherein the substrate comprises or consists of at least one metal, metal mixture, metal composite or alloy which is susceptible to corrosion such as oxidation, pitting corrosion, rusting, crevice corrosion and the like, especially wherein the at least one metal, metal mixture, metal composite or alloy is selected from the group consisting of iron, steel, aluminum, dye-cast-aluminum, dye-cast-alloys, magnesium-aluminum-alloys as well as mixtures and combinations thereof; and/or
wherein the substrate comprises a technical or electronic component, part, structural member or the like, especially for use in the automotive, aircraft, transportation, construction, computer or electronic industry; and/or
wherein the surface of the substrate to be treated with the anticorrosion composition is contacted and/or coated with the anticorrosion composition, especially over the entire surface, and/or wherein the anticorrosion composition is applied onto at least one surface of the substrate to be treated, especially over the entire surface; and/or wherein the process step of treating a surface of the substrate at least partially with an anticorrosion composition comprises a coating treatment, especially over the entire surface.

3. The process according to Claim 1 or 2,
wherein the anticorrosion composition is used and/or applied with thicknesses in the range from 0.1 to 1,000 µm, particularly in the range from 0.5 to 900 µm, preferably in the range from 1 to 800 µm, more preferably in the range from 5 to 700 µm, even more preferably in the range from 10 to 600 µm, most preferably in the range from 20 to 500 µm; and/or
wherein the anticorrosion composition is used and/or applied in amounts in the range from 0.1 to 1,000 g/m², particularly in the range from 1 to 750 g/m², preferably in the range from 5 to 600 g/m², more preferably in the range from 10 to 500 g/m², even more preferably in the range from 25 to 400 g/m², most preferably in the range from 50 to 350 g/m²; and/or
wherein the anticorrosion composition comprises the continuous phase, based on the anticorrosion composition, in an amount from 3 to 99.999 % by weight, particularly in an amount from 20 to 99.999 % by weight, more particularly in an amount from 50 to 99.999 % by weight, even more particularly in an amount from 55 to 99.9 % by weight, especially in an amount from 60 to 99.5 % by weight, preferably in an amount from 65 to 99 % by weight, more preferably in an amount from 70 to 98 % by weight, even more preferably in an amount from 75 to 97 % by weight, most preferably in an amount from 80 to 95 % by weight; and/or
wherein the anticorrosion composition comprises the carbon-based additive, based on the anticorrosion composition, in an amount from 0.005 to 3 % by weight, preferably in an amount from 0.01 to 2 % by weight, more preferably in an amount from 0.015 to 1 % by weight, even more preferably in an amount from 0.02 to 0.5 % by weight, most preferably in an amount from 0.02 to 0.1 % by weight, very most preferably in an amount from 0.02 to 0.0999 % by weight; and/or
wherein the anticorrosion composition comprises the dispersant, based on the anticorrosion composition, in an amount from 0.001 to 15 % by weight, particularly in an amount from 0.002 to 10 % by weight, preferably in an amount from 0.005 to 5 % by weight, more preferably in an amount from 0.01 to 2 % by weight, even more preferably in an amount from 0.02 to 1 % by weight; and/or
wherein the anticorrosion composition comprises the carbon-based additive, based on the anticorrosion composition, in an amount of at least 0.001 % by weight, particularly in an amount of at least 0.002 % by weight, preferably in an amount of at least 0.005 % by weight, more preferably in an amount of at least 0.01% by weight; and/or
wherein the anticorrosion composition comprises the carbon-based additive, based on the anticorrosion composition, in an amount of less than 0.1 % by weight.

4. The process according to any of the preceding claims,
wherein the continuous phase comprises or constitutes a matrix, especially a matrix for the remaining ingredients; and/or
wherein the continuous phase is selected from the group consisting of crosslinkable resins, non-crosslinkable resins as well as mixtures and combinations thereof; and/or wherein the continuous phase is present in a solid or in a liquid state under atmospheric pressure (101.325 kPa) and within a temperature range from 10 to 100 °C, especially within a temperature range from 15 to 70 °C, preferably within a temperature range from 20 to 50 °C; and/or
wherein the continuous phase is curable by at least one method selected from (i) chemical methods; (ii) oxidative methods; (iii) thermal methods, especially heat; (iv) irradiation methods, especially UV-irradiation, microwave irradiation, IR-irradiation; (v) moisture; and (iv) combinations thereof; especially chemical methods; and/or
wherein the continuous phase is selected from the group consisting of thermosetting acrylics, aminoplasts, urethanes, carbamates, carbonates, polyesters, epoxies, silicones as well as mixtures and combinations thereof, especially epoxies; and/or
wherein the continuous phase is selected from the group consisting of at least one of (i) one-component polyurethanes; (ii) two-component polyurethanes; (iii) acrylics; (iv) oil-modified urethanes; (v) long-oil alkyds; (vi) polyurethane dispersions; (vii) acrylic emulsions; (viii) epoxies; and (ix) water reducible alkyds; especially epoxies; and/or wherein the continuous phase further comprises at least one further component selected from the group consisting of (i) solvents, especially aqueous solvents, organic solvents as well as mixtures and combinations thereof; (ii) crosslinkers, especially amine-based crosslinkers; (iii) coupling agents; and mixtures and combinations thereof.

5. The process according to any of the preceding claims,
wherein the at least one carbon-based additive comprises or consists of carbon nanotubes (CNTs), especially carbon nanotubes selected from the group consisting of (i) single-wall carbon nanotubes (SWCNTs or SWNTs); (ii) multiwall carbon nanotubes (MWCNTs or MWNTs), especially 2- to 30-wall, preferably 3- to 15-wall carbon nanotubes; and (iii) mixtures and combinations thereof; and/or
wherein the at least one carbon-based additive comprises or consists of carbon nanotubes (CNTs) having average internal diameters in the range from 0.4 to 60 nm, in particular in the range from 1 to 10 nm, preferably in the range from 2 to 6 nm; and/or wherein the at least one carbon-based additive comprises or consists of carbon nanotubes (CNTs) having average external diameters in the range from 1 to 80 nm, in particular in the range from 5 to 30 nm, preferably in the range from 10 to 20 nm; and/or wherein the at least one carbon-based additive comprises or consists of carbon nanotubes (CNTs) having average lengths in the range from 0.01 to 1,000 µm, in particular in the range from 0.3 to 500 µm, preferably in the range from 0.4 to 200 µm, more preferably in the range from 1 to 100 µm, most preferably 0.5 to 30 µm; and/or
wherein the at least one carbon-based additive comprises or consists of carbon nanotubes (CNTs) having a tensile strength per carbon nanotube of at least 1 GPa, in particular of at least 5 GPa, preferably of at least 10 GPa; and/or
wherein the at least one carbon-based additive comprises or consists of carbon nanotubes (CNTs) having an elasticity modulus per carbon nanotube of at least 0.1 TPa, in particular at least 0.5 TPa, preferably at least 1 TPa; and/or
wherein the at least one carbon-based additive comprises or consists of carbon nanotubes (CNTs) having a thermal conductivity of at least 500 W/mK, in particular of at least 1,000 W/mK, preferably of at least 2,000 W/mK; and/or
wherein the at least one carbon-based additive comprises or consists of carbon nanotubes (CNTs) having an electrical conductivity of at least 10³ S/cm, in particular of at least 0.5 x 10⁴ S/cm, preferably of at least 10⁴ S/cm; and/or
wherein the at least one carbon-based additive comprises or consists of carbon nanotubes (CNTs) having a bulk density in the range from 0.01 to 0.3 g/cm³, in particular in the range from 0.02 to 0.2 g/cm³, preferably in the range from 0.1 to 0.2 g/cm³.

6. The process according to any of the preceding claims, wherein the carbon-based additive is incorporated and/or used in the form of a dispersion,
especially wherein the dispersion is obtainable by dispersing the carbon-based additive, especially without prior pretreatment of the carbon-based additive, in a continuous phase, especially in at least one dispersion medium, in the presence of at least one dispersing agent (dispersant), with introduction of an energy input sufficient for dispersing; and/or
especially wherein the carbon-based additive is dispersed in amounts of 1 x 10⁻⁵ % to 30 % by weight, in particular in amounts of 1 x 10⁻⁴ % to 20 % by weight, preferably in amounts of 1 x 10⁻³ % to 10 % by weight, more preferably in amounts of 1 x 10⁻² % to 7.5 % by weight, very preferably in amounts of 1 x 10⁻¹ % to 5 % by weight, based on the resulting dispersion, in the continuous phase; and/or
especially wherein the dispersing agent (dispersant) is used in amounts of 10 % to 400 % by weight, in particular in amounts of 25 % to 350 % by weight, preferably in amounts of 50 % to 300 % by weight, more preferably in amounts of 75 % to 275 % by weight, very preferably in amounts of 100 % to 250 % by weight, based on the carbon-based additive to be dispersed; and/or
especially wherein the dispersing operation is carried out over a period of 0.01 to 30 minutes, in particular over a period of 0.1 to 20 minutes, preferably over a period of 0.2 to 15 minutes, more preferably over a period of 0.5 to 10 minutes, very preferably over a period of 0.5 to 5 minutes, especially based on 1 g of carbon-based additive to be dispersed; and/or
especially wherein the energy input takes place by means of ultrasound treatment and/or wherein the amount of energy introduced, calculated as energy introduced per unit quantity of carbon-based additive to be dispersed, is 5,000 to 500,000 kJ/kg, in particular 10,000 to 250,000 kJ/kg, preferably 15,000 to 100,000 kJ/kg, more preferably 25,000 to 50,000 kJ/kg; and/or
especially wherein the dispersing operation proper is preceded by a method step in which the carbon-based additive to be subsequently dispersed is contacted and homogenized with the continuous phase, in particular the dispersion medium, and with the dispersing agent and also with any further constituents and/or ingredients of the dispersion, in particular with stirring; and/or
especially wherein the dispersion is carried out at temperatures below the boiling temperature of the continuous phase, in particular of the dispersion medium, in particular at temperatures in the range from 10 to 100 °C, preferably in the range from 15 to 70 °C, in particular with the dispersing operation being carried out with cooling where appropriate; and/or
especially wherein the dispersing operation is carried out without prior pretreatment of the carbon-based additive to be dispersed, in particular without prior oxidation, chemical treatment, thermal treatment, polarization or halogenation.

7. The process according to any of the preceding claims, wherein the carbon-based additive has been functionalized, particularly by at least one dispersing agent (dispersant), preferably by at least one dispersing agent as defined in Claim 1 and/or Claim 8;
especially wherein the carbon-based additive has been functionalized by contacting and/or treating and/or reacting the carbon-based additive with the at least one dispersing agent (dispersant), especially in presence of a dispersion medium and/or especially within a dispersion; and/or
especially wherein the functionalization of the carbon-based additive has been performed without prior pretreatment via oxidation, chemical treatment, thermal treatment, polarization nor halogenation; and/or
especially wherein the carbon-based additive has been functionalized exclusively by contacting and/or treating and/or reacting the carbon-based additive with the at least one dispersing agent (dispersant).

8. The process according to any of the preceding claims,
wherein the at least one dispersing agent is based on a functionalized polymer having an average molecular mass, preferably a number-average molecular mass, of at least 500 g/mol, preferably of at least 1,000 g/mol, more preferably of at least 2,000 g/mol, especially as determined via Gel Permeation Chromatography (GPC), particularly according to German standard DIN 55672; and/or
wherein the at least one dispersing agent comprises functional groups capable of interacting with the continuous phase and/or with the carbon-based additive, especially with the continuous phase and with the carbon-based additive.

9. The process according to any of the preceding claims,
wherein the anticorrosion composition comprises further ingredients, especially selected from the group consisting of (i) rheology modifiers, especially aromatic rheology modifiers; (ii) adhesion promoters, especially silanes; (iii) nanoparticles, especially inorganic, organic or organo-metallic nanoparticles; (iv) leveling agents, especially polyacrylates; (v) defoamers; (vi) emulsifiers; (vii) fillers; (viii) dyes; (ix) pigments; (x) plasticizers; (xii) stabilizers; (xiii) catalysts; and (xiv) combinations and mixtures thereof; and/or
wherein the anticorrosion composition comprises the further ingredients, based on the anticorrosion composition, in a total amount from 0.001 to 90 % by weight, particularly in a total amount from 0.01 to 75 % by weight, preferably in a total amount from 0.1 to 50 % by weight, more preferably in a total amount from 0.15 to 25 % by weight.

10. The process according to any of the preceding claims, wherein the anticorrosion composition is chromate-free and/or does not comprise any chromate, especially not any zinc chromate and/or strontium chromate, preferably not any hexavalent chromium.

11. The process according to any of the preceding claims,
wherein the process step of treating the substrate with the anticorrosion composition is followed by a drying and/or curing step, especially under heat and/or radiation treatment, especially wherein the continuous phase is at least partially removed and/or cured,
especially wherein the substrate comprising and/or provided with the dried and/or cured anticorrosion composition is treated with one or more further coating layers which optionally comprise pigments and/ or fillers.

12. An anticorrosion composition, especially for providing a substrate, particularly a metallic substrate, with corrosion resistance and/or with anticorrosion properties,
wherein the anticorrosion composition comprises:
(i) a dispersion medium as a continuous phase in an amount from 3 to 99.999 % by weight, particularly in an amount from 20 to 99.999 % by weight, preferably in an amount from 50 to 99.999 % by weight, based on the anticorrosion composition;
(ii) at least one carbon-based additive selected from the group consisting of carbon nanotubes (CNTs) and analogous carbon allotropes as well as mixtures and combinations thereof in an amount from 0.001 to 4 % by weight based on the anticorrosion composition,
wherein the analogous carbon allotropes are selected from the group consisting of (i) optionally modified graphites; (ii) optionally modified graphenes; (iii) fullerenes; (iv) carbon blacks; (v) carbon fibers; (vi) optionally modified carbon nanohorns (CNHs); (vii) carbon nanocones (CNCs); (viii) onion-like carbons (OLCs); and (ix) mixtures and combinations thereof;
(iii) at least one dispersing agent (dispersant) in an amount from 0.0001 to 20 % by weight based on the anticorrosion composition,
wherein the at least one dispersing agent is selected from the group consisting of (i) polymers and copolymers having functional groups and/or groups with pigment affinity; (ii) alkylammonium salts of polymers and copolymers; (iii) polymers and copolymers having acidic groups; (iv) comb copolymers and block copolymers; (v) optionally modified acrylate block copolymers; (vi) optionally modified polyurethanes; (vii) optionally modified and/or salified polyamines; (viii) phosphoric esters; (ix) ethoxylates; (x) polymers and copolymers having fatty acid radicals; (xi) optionally modified polyacrylates; (xii) optionally modified polyesters; (xiii) polyphosphates; and (xiv) mixtures thereof;
wherein the anticorrosion composition is a dispersion comprising the carbon-based additive dispersed in the continuous phase.

13. Use of an anticorrosion composition as defined in Claim 12 for providing a substrate, particularly a metallic substrate, with corrosion resistance and/or with anticorrosion properties .

14. An anticorrosion coating, especially applied onto a substrate, particularly a metallic substrate, wherein the anticorrosion coating is obtainable by a process as defined in any of Claims 1 to 11 and/or wherein the anticorrosion coating is obtainable by using an anticorrosion composition as defined in Claim 12.

15. A substrate, particularly a metallic substrate, provided with corrosion resistance and/or with anticorrosion properties, which substrate is obtainable by treating at least one surface of the substrate at least partially by a process as defined in any of Claims 1 to 11 and/or by treating at least one surface of the substrate at least partially with an anticorrosion composition as defined in Claim 12.

## Patentansprüche

1. Verfahren zum Bereitstellen einer Trägerschicht, insbesondere einer metallischen Trägerschicht, mit Korrosionsbeständigkeit und/oder mit Korrosionsschutzeigenschaften,
wobei das Verfahren den Verfahrensschritt des Behandelns zumindest einer Oberfläche der Trägerschicht zumindest teilweise mit einer Korrosionsschutzzusammensetzung umfasst;
wobei die Korrosionsschutzzusammensetzung Folgendes umfasst:
(i) ein Dispersionsmedium als kontinuierliche Phase in einer Menge von 3 bis 99,999 Gew.-%, insbesondere in einer Menge von 20 bis 99,999 Gew.-%, vorzugsweise in einer Menge von 50 bis 99,999 Gew.-%, bezogen auf die Korrosionsschutzzusammensetzung;
(ii) mindestens ein Additiv auf Grundlage von Kohlenstoff, das ausgewählt wird aus der Gruppe bestehend aus Kohlenstoff-Nanoröhren (CNTs) und analogen Kohlenstoffallotropen sowie deren Gemischen und Kombinationen in einer Menge von 0,001 bis 4 Gew.-%, bezogen auf die Korrosionsschutzzusammensetzung,
wobei die analogen Kohlenstoffallotrope ausgewählt werden aus der Gruppe bestehend aus (i) wahlweise modifizierten Graphiten; (ii) wahlweise modifizierten Graphenen; (iii) Fullerenen; (iv) Rußen; (v) Kohlenstofffasern; (vi) wahlweise modifizierten Kohlenstoff-Nanohörnern (CNHs); (vii) Kohlenstoff-Nanocones (CNCs); (viii) zwiebelartigen Kohlenstoffen (OLCs); und (ix) deren Gemischen und Kombinationen;
(iii) mindestens ein Dispergiermittel (Dispergator) in einer Menge von 0,0001 bis 20 Gew.-% bezogen auf die Korrosionsschutzzusammensetzung,
wobei das mindestens eine Dispergiermittel ausgewählt wird aus der Gruppe bestehend aus (i) Polymeren und Copolymeren, die funktionelle Gruppen aufweisen und/oder Gruppen mit Pigmentaffinität; (ii) Alkylammoniumsalzen von Polymeren und Copolymeren; (iii) Polymeren und Copolymeren, die saure Gruppen aufweisen; (iv) Kamm-Copolymeren und Block-Copolymeren; (v) wahlweise modifizierten Acrylat-Block-Copolymeren; (vi) wahlweise modifizierten Polyurethanen; (vii) wahlweise modifizierten und/oder versalzten Polyaminen; (viii) Phosphorsäureestern; (ix) Ethoxylaten; (x) Polymeren und Copolymeren, die Fettsäureradikale aufweisen, (xi) wahlweise modifizierten Polyacrylaten; (xii) wahlweise modifizierten Polyestern; (xiii) Polyphosphaten; und (xiv) deren Gemischen;
wobei die Korrosionsschutzzusammensetzung eine Dispersion ist, die das Additiv auf Grundlage von Kohlenstoff in der kontinuierlichen Phase dispergiert umfasst.

2. Verfahren nach Anspruch 1,
wobei die Trägerschicht zumindest ein Metall umfasst oder aus diesem besteht, das gegenüber Korrosion anfällig ist, besonders ausgewählt aus der Gruppe bestehend aus Eisen, Kupfer, Zink, Aluminium, Silber, Titan, Zinn sowie deren Gemischen, Kombinationen und Legierungen; und/oder
wobei die Trägerschicht Eisen, Stahl, Edelstahl, Messing, Aluminium, Kupfer sowie deren Gemische, Kombinationen und Legierungen umfasst oder daraus besteht; und/oder
wobei die Trägerschicht zumindest ein Metall, Metallgemisch, Verbundmetall oder Legierung umfasst oder daraus besteht, die gegenüber Korrosion anfällig sind, wie etwa Oxidation, Lochfraßkorrosion, Rosten, Spaltkorrosion und dergleichen, wobei besonders das mindestens eine Metall, Metallgemisch, Verbundmetall oder Legierung ausgewählt wird aus der Gruppe bestehend aus Eisen, Stahl, Aluminium, Aluminiumdruckguss, Druckgusslegierungen, Magnesium-Aluminium-Legierungen sowie deren Gemischen und Kombinationen; und/oder
wobei die Trägerschicht eine technische oder elektronische Komponente, Teil, Bauelement oder dergleichen umfasst, besonders für den Einsatz in der Automobil-, Luftfahrt-, Transport-, Bau-, Computer- oder Elektronik-Industrie; und/oder
wobei die mit der Korrosionsschutzzusammensetzung zu behandelnde Oberfläche der Trägerschicht mit der Korrosionsschutzzusammensetzung kontaktiert und/oder beschichtet wird, besonders über die gesamte Oberfläche, und/oder wobei die Korrosionsschutzzusammensetzung auf mindestens eine zu behandelnde Oberfläche der Trägerschicht aufgebracht wird, besonders über die gesamte Oberfläche; und/oder wobei der Verfahrensschritt des Behandelns einer Oberfläche der Trägerschicht zumindest teilweise mit einer Korrosionsschutzzusammensetzung eine Beschichtungsbehandlung umfasst, besonders über die gesamte Oberfläche.

3. Verfahren nach Anspruch 1 oder 2,
wobei die Korrosionsschutzzusammensetzung in Dicken verwendet und/oder aufgebracht wird im Bereich von 0,1 bis 1000 µm, besonders im Bereich von 0,5 bis 900 µm, vorzugsweise im Bereich von 1 bis 800 µm, besonders bevorzugt im Bereich von 5 bis 700 µm, weiter bevorzugt im Bereich von 10 bis 600 µm, insbesondere im Bereich von 20 bis 500 µm; und/oder
wobei die Korrosionsschutzzusammensetzung eingesetzt und/oder aufgebracht wird in Mengen im Bereich von 0,1 bis 1000 g/m², besonders im Bereich von 1 bis 750 g/m², vorzugsweise im Bereich von 5 bis 600 g/m², besonders bevorzugt im Bereich von 10 bis 500 g/m², weiter bevorzugt im Bereich von 25 bis 400 g/m², insbesondere im Bereich von 50 bis 350 g/m²; und/oder
wobei die Korrosionsschutzzusammensetzung die kontinuierliche Phase, bezogen auf die Korrosionsschutzzusammensetzung, in einer Menge von 3 bis 99,999 Gew.-% umfasst, besonders in einer Menge von 20 bis 99,999 Gew.-%, besonders bevorzugt in einer Menge von 50 bis 99,999 Gew.-%, weiter bevorzugt in einer Menge von 55 bis 99,9% Gew.-%, besonders in einer Menge von 60 bis 99,5 Gew.-%, vorzugsweise in einer Menge von 65 bis 99 Gew.-%, besonders bevorzugt in einer Menge von 70 bis 98 Gew.-%, weiter bevorzugt in einer Menge von 75 bis 97 Gew.-%, insbesondere in einer Menge von 80 bis 95 Gew.-%; und/oder wobei die Korrosionsschutzzusammensetzung das Additiv auf Grundlage von Kohlenstoff, bezogen auf die Korrosionsschutzzusammensetzung, in einer Menge von 0,005 bis 3 Gew.-% umfasst, vorzugsweise in einer Menge von 0,01 bis 2 Gew.-%, besonders bevorzugt in einer Menge von 0,015 bis 1 Gew.-%, weiter bevorzugt in einer Menge von 0,02 bis 0,5 Gel.-%, insbesondere in einer Menge von 0,02 bis 0,1 Gew.-%, am allermeisten bevorzugt in einer Menge von 0,02 bis 0,0999 Gew.-%; und/oder
wobei die Korrosionsschutzzusammensetzung das Dispergiermittel, bezogen auf die Korrosionsschutzzusammensetzung, in einer Menge von 0,001 bis 15 Gew.-% umfasst, besonders in einer Menge von 0,002 bis 10 Gew.-%, vorzugsweise in einer Menge von 0,005 bis 5 Gew.-%, besonders bevorzugt in einer Menge von 0,01 bis 2 Gew.-%, weiter bevorzugt in einer Menge von 0,02 bis 1 Gew.-%; und/oder
wobei die Korrosionsschutzzusammensetzung das Additiv auf Grundlage von Kohlenstoff, bezogen auf die Korrosionsschutzzusammensetzung, in einer Menge von mindestens 0,001 Gew.-% umfasst, besonders in einer Menge von mindestens 0,002 Gew.-%, vorzugsweise in einer Menge von mindestens 0,005 Gew.-%, besonders bevorzugt in einer Menge von mindestens 0,01 Gew.-%; und/oder
wobei die Korrosionsschutzzusammensetzung das Additiv auf Grundlage von Kohlenstoff, bezogen auf die Korrosionsschutzzusammensetzung, in einer Menge von weniger als 0,1 Gew.-% umfasst.

4. Verfahren nach einem der vorherigen Ansprüche,
wobei die kontinuierliche Phase eine Matrix umfasst oder bildet, insbesondere eine Matrix für die restlichen Inhaltsstoffe; und/oder
wobei die kontinuierliche Phase ausgewählt wird aus der Gruppe bestehend aus quervernetzbaren Harzen, nicht-quervernetzbaren Harzen sowie deren Gemischen und Kombinationen; und/oder
wobei die kontinuierliche Phase in einem festen oder in einem flüssigen Zustand vorliegt unter Atmosphärendruck (101,325 kPa) und in einem Temperaturbereich von 10 bis 100 °C, besonders in einem Temperaturbereich von 15 bis 70 °C, vorzugsweise in einem Temperaturbereich von 20 bis 50 °C; und/oder
wobei die kontinuierliche Phase durch mindestens ein Verfahren härtbar ist, das ausgewählt wird aus (i) chemischen Verfahren; (ii) oxidativen Verfahren; (iii) thermischen Verfahren, besonders Wärme; (iv) Bestrahlungsverfahren, besonders UV-Bestrahlung, Mikrowellenbestrahlung, IR-Bestrahlung; (v) Feuchtigkeit; und (vi) deren Kombinationen; besonders chemischen Verfahren; und/oder
wobei die kontinuierliche Phase ausgewählt wird aus der Gruppe bestehend aus duroplastischen Acrylen, Aminoplasten, Urethanen, Carbamaten, Carbonaten, Polyestern, Epoxiden, Silikonen sowie deren Gemischen und Kombinationen, besonders Epoxiden; und/oder
wobei die kontinuierliche Phase ausgewählt wird aus der Gruppe bestehend aus mindestens einem von (i) Einkomponenten-Polyurethanen; (ii) Zwei-Komponenten-Polyurethanen; (iii) Acrylen; (iv) Öl-modifizierten Urethanen; (v) langöligen Alkyden; (vi) Polyurethan-Dispersionen; (vii) acrylischen Emulsionen; (viii) Epoxiden; und (ix) wasserreduzierbaren Alkyden; besonders Epoxiden; und/oder
wobei die kontinuierliche Phase ferner mindestens eine weitere Komponente umfasst, die ausgewählt wird aus der Gruppe bestehend aus (i) Lösemitteln, besonders wässrigen Lösemitteln, organischen Lösemitteln sowie deren Gemischen und Kombinationen; (ii) Quervernetzern, besonders Quervernetzern auf Grundlage von Aminen; (iii) Kupplungsmitteln; und deren Gemischen und Kombinationen.

5. Verfahren nach einem der vorherigen Ansprüche,
wobei das mindestens eine Additiv auf Grundlage von Kohlenstoff Kohlenstoff-Nanoröhren (CNTs) umfasst oder daraus besteht, besonders Kohlenstoff-Nanoröhren, die ausgewählt werden aus der Gruppe bestehend aus (i) einwandigen Kohlenstoff-Nanoröhren (SWCNTs oder SWNTs); (ii) mehrwandigen Kohlenstoff-Nanoröhren (MWCNTs oder MWNTs), besonders 2- bis 30-wändigen, vorzugsweise 3- bis 15-wändigen Kohlenstoff-Nanoröhren; und (iii) deren Gemischen und Kombinationen; und/oder
wobei das mindestens eine Additiv auf Grundlage von Kohlenstoff Kohlenstoff-Nanoröhren (CNTs) umfasst oder daraus besteht, die durchschnittliche Innendurchmesser im Bereich von 0,4 bis 60 nm aufweisen, insbesondere im Bereich von 1 bis 10 nm, vorzugsweise im Bereich von 2 bis 6 nm; und/oder
wobei das mindestens eine Additiv auf Grundlage von Kohlenstoff Kohlenstoff-Nanoröhren (CNTs) umfasst oder daraus besteht, die durchschnittliche Außendurchmesser im Bereich von 1 bis 80 nm aufweisen, insbesondere im Bereich von 5 bis 30 nm, vorzugsweise im Bereich von 10 bis 20 nm; und/oder
wobei das mindestens eine Additiv auf Grundlage von Kohlenstoff Kohlenstoff-Nanoröhren (CNTs) umfasst oder daraus besteht, die durchschnittliche Längen im Bereich von 0,01 bis 1000 µm aufweisen, besonders im Bereich von 0,3 bis 500 µm, vorzugsweise im Bereich von 0,4 bis 200 µm besonders bevorzugt im Bereich von 1 bis 100 µm, insbesondere 0,5 bis 30 µm; und/oder
wobei das mindestens eine Additiv auf Grundlage von Kohlenstoff Kohlenstoff-Nanoröhren (CNTs) umfasst oder daraus besteht, die eine Zugfestigkeit pro Kohlenstoff-Nanoröhre von mindestens 1 GPa aufweisen, insbesondere von mindestens 5 GPa, vorzugsweise von mindestens 10 GPa; und/oder
wobei das mindestens eine Additiv auf Grundlage von Kohlenstoff Kohlenstoff-Nanoröhren (CNTs) umfasst oder daraus besteht, die ein Elastizitätsmodul pro Kohlenstoff-Nanoröhre von mindestens 0,1 TPa aufweisen, insbesondere mindestens 0,5 TPa, vorzugsweise mindestens 1 TPa; und/oder
wobei das mindestens eine Additiv auf Grundlage von Kohlenstoff Kohlenstoff-Nanoröhren (CNTs) umfasst oder daraus besteht, die eine Wärmeleitfähigkeit von mindestens 500 W/mK aufweisen, insbesondere von mindestens 1.000 W/mK, vorzugsweise von mindestens 2.000 W/mK; und/oder
wobei das mindestens eine Additiv auf Grundlage von Kohlenstoff Kohlenstoff-Nanoröhren (CNTs) umfasst oder daraus besteht, die eine elektrische Leitfähigkeit von mindestens 10³ S/cm, insbesondere von mindestens 0,5 x 10⁴ S/cm, vorzugsweise von mindestens 10⁴ S/cm; und/oder
wobei das mindestens eine Additiv auf Grundlage von Kohlenstoff Kohlenstoff-Nanoröhren (CNTs) umfasst oder daraus besteht, die eine Schüttdichte im Bereich von 0,01 bis 0,3 g/cm³ aufweisen, insbesondere im Bereich von 0,02 bis 0,2 g/cm³, vorzugsweise im Bereich von 0,1 bis 0,2 g/cm³.

6. Verfahren nach einem der vorherigen Ansprüche, wobei das Additiv auf Grundlage von Kohlenstoff in Form einer Dispersion eingearbeitet und/oder verwendet wird,
wobei besonders die Dispersion durch Dispergieren des Additivs auf Grundlage von Kohlenstoff erhältlich ist, besonders ohne vorherige Vorbehandlung des Additivs auf Grundlage von Kohlenstoff, in einer kontinuierlichen Phase, besonders in mindestens einem Dispersionsmedium, in Gegenwart von mindestens einem Dispergiermittel (Dispergator), mit Einleitung eines Energieeintrags, der zum Dispergieren ausreichend ist; und/oder
wobei besonders das Additiv auf Grundlage von Kohlenstoff in Mengen von 1 x 10⁻⁵ Gew.-% bis 30 Gew.-% dispergiert wird, insbesondere in Mengen von 1 x 10⁻⁴ Gew.-% bis 20 Gew.-%, vorzugsweise in Mengen von 1 x 10⁻³ Gew.-% bis 10 Gew.-%, besonders bevorzugt in Mengen von 1 x 10⁻² Gew.-% bis 7,5 Gew.-%, ganz besonders bevorzugt in Mengen von 1 x 10⁻¹ Gew.-% bis 5 Gew.-%, bezogen auf die resultierende Dispersion, in der kontinuierlichen Phase; und/oder
wobei besonders das Dispergiermittel (Dispergator) in Mengen von 10 Gew.-% bis 400 Gew.-% verwendet wird, insbesondere in Mengen von 25 Gew.-% bis 350 Gew.-%, vorzugsweise in Mengen von 50 Gew.-% bis 300 Gew.-%, besonders bevorzugt in Mengen von 75 Gew.-% bis 275 Gew.-%, ganz besonders bevorzugt in Mengen von 100 Gew.-% bis 250 Gew.-%, bezogen auf das zu dispergierende Additiv auf Grundlage von Kohlenstoff; und/oder
wobei besonders der Dispergiervorgang über einen Zeitraum von 0,01 bis 30 Minuten durchgeführt wird, insbesondere über einen Zeitraum von 0,1 bis 20 Minuten, vorzugsweise über einen Zeitraum von 0,2 bis 15 Minuten, besonders bevorzugt über einen Zeitraum von 0,5 bis 10 Minuten, ganz besonders bevorzugt über einen Zeitraum von 0,5 bis 5 Minuten, besonders auf Basis von 1 g des zu dispergierenden Additivs auf Grundlage von Kohlenstoff; und/oder
wobei besonders der Energieeintrag mittels Ultraschallbehandlung erfolgt und/oder wobei die eingeführte Energiemenge, berechnet als Energie, die pro Einheitsmenge des zu dispergierenden Additivs auf Grundlage von Kohlenstoff berechnet wird, 5.000 bis 500.000 kJ/kg, insbesondere 10.000 bis 250.000 kJ/kg, vorzugsweise 15.000 bis 100.000 kJ/kg, besonders bevorzugt 25.000 bis 50.000 kJ/kg beträgt; und/oder
wobei besonders dem eigentlichen Dispergiervorgang ein Verfahrensschritt vorangeht, bei dem das anschließend zu dispergierende Additiv auf Grundlage von Kohlenstoff mit der kontinuierlichen Phase kontaktiert und homogenisiert wird, insbesondere dem Dispersionsmedium, und mit dem Dispergiermittel und auch mit irgendwelchen weiteren Bestandteilen und/oder Inhaltsstoffen der Dispersion, insbesondere unter Rühren; und/oder
wobei besonders die Dispersion bei Temperaturen unterhalb des Siedepunkts der kontinuierlichen Phase, insbesondere des Dispersionsmediums, durchgeführt wird, insbesondere bei Temperaturen im Bereich von 10 bis 100 °C, vorzugsweise im Bereich von 15 bis 70 °C, insbesondere wobei der Dispersionsvorgang gegebenenfalls unter Kühlung durchgeführt wird, und/oder
wobei besonders der Dispersionsvorgang ohne vorherige Vorbehandlung des zu dispergierenden Additivs auf Grundlage von Kohlenstoff durchgeführt wird, insbesondere ohne vorherige Oxidation, chemische Behandlung, Wärmebehandlung, Polarisation oder Halogenierung.

7. Verfahren nach einem der vorherigen Ansprüche, wobei das Additiv auf Grundlage von Kohlenstoff funktionalisiert wurde, insbesondere durch mindestens ein Dispergiermittel (Dispergator), vorzugsweise durch mindestens ein Dispergiermittel wie in Anspruch 1 und/oder Anspruch 8 definiert;
wobei besonders das Additiv auf Grundlage von Kohlenstoff funktionalisiert wurde durch Kontaktieren und/oder Behandeln und/oder Umsetzen des Additivs auf Grundlage von Kohlenstoff mit dem zumindest einen Dispergiermittel (Dispergator), besonders in Gegenwart eines Dispersionsmediums und/oder besonders in einer Dispersion; und/oder
wobei besonders die Funktionalisierung des Additivs auf Grundlage von Kohlenstoff ohne vorherige Vorbehandlung weder durch Oxidation, chemische Behandlung, thermische Behandlung, Polarisation noch Halogenierung durchgeführt wurde; und/oder
wobei besonders das Additiv auf Grundlage von Kohlenstoff ausschließlich funktionalisiert wurde durch Kontaktieren und/oder Behandeln und/oder Umsetzen des Additivs auf Grundlage von Kohlenstoff mit dem zumindest einen Dispergiermittel (Dispergator).

8. Verfahren nach einem der vorherigen Ansprüche,
wobei das mindestens eine Dispergiermittel auf einem funktionalisierten Polymer basiert, das eine mittlere Molekülmasse, vorzugsweise eine zahlenmittlere Molekülmasse von mindestens 500 g/mol aufweist, vorzugsweise von mindestens 1000 g/mol, besonders bevorzugt von mindestens 2000 g/mol, besonders wie durch Gelpermeationschromatographie (GPC) bestimmt, insbesondere nach deutschem Standard DIN 55672; und/oder
wobei das zumindest eine Dispergiermittel funktionelle Gruppen umfasst, die mit der kontinuierlichen Phase und/oder mit dem Additiv auf Grundlage von Kohlenstoff interagieren können, besonders mit der kontinuierlichen Phase und mit dem Additiv auf Grundlage von Kohlenstoff.

9. Verfahren nach einem der vorherigen Ansprüche,
wobei die Korrosionsschutzzusammensetzung weitere Inhaltsstoffe umfasst, die besonders ausgewählt werden aus der Gruppe bestehend aus (i) Rheologiemodifikatoren, besonders aromatischen Rheologiemodifikatoren; (ii) Haftvermittlern, insbesondere Silanen; (iii) Nanopartikeln, insbesondere anorganischen, organischen oder organisch-metallischen Nanopartikeln; (iv) Egalisiermitteln, insbesondere Polyacrylaten; (v) Entschäumern; (vi) Emulgatoren; (vii) Füllstoffen; (viii) Farbstoffen; (ix) Pigmenten; (x) Weichmachern; (xii) Stabilisatoren; (xiii) Katalysatoren und (xiv) deren Kombinationen und Gemischen; und/oder
wobei die Korrosionsschutzzusammensetzung die weiteren Inhaltsstoffe, bezogen auf die Korrosionsschutzzusammensetzung, in einer Gesamtmenge von 0,001 bis 90 Gew.-% umfasst, insbesondere in einer Gesamtmenge von 0,01 bis 75 Gew.-%, vorzugsweise in einer Gesamtmenge von 0,1 bis 50 Gew.-%, besonders bevorzugt in einer Gesamtmenge von 0,15 bis 25 Gew.-%.

10. Verfahren nach einem der vorherigen Ansprüche, wobei die Korrosionsschutzzusammensetzung chromatfrei ist und/oder kein Chromat enthält, besonders kein Zinkchromat und/oder Strontiumchromat, vorzugsweise kein sechswertiges Chrom.

11. Verfahren nach einem der vorherigen Ansprüche,
wobei der Verfahrensschritt des Behandelns der Trägerschicht mit der Korrosionsschutzzusammensetzung von einem Trocknungs- und/oder Härtungsschritt gefolgt wird, besonders unter Wärme- und/oder Strahlungsbehandlung, besonders wobei die kontinuierliche Phase zumindest teilweise entfernt und/oder ausgehärtet wird,
wobei besonders die die getrocknete und/oder ausgehärtete Korrosionsschutzzusammensetzung umfassende oder mit dieser versehene Trägerschicht mit einer oder mehreren weiteren Überzugsschichten behandelt wird, die wahlweise Pigmente und/oder Füllstoffe umfassen.

12. Korrosionsschutzzusammensetzung, besonders zum Bereitstellen einer Trägerschicht, insbesondere einer metallischen Trägerschicht, mit Korrosionsbeständigkeit und/oder Korrosionsschutzeigenschaften,
wobei die Korrosionsschutzzusammensetzung Folgendes umfasst:
(i) ein Dispersionsmedium als kontinuierliche Phase in einer Menge von 3 bis 99,999 Gew.-%, insbesondere in einer Menge von 20 bis 99,999 Gew.-%, vorzugsweise in einer Menge von 50 bis 99,999 Gew.-%, bezogen auf die Korrosionsschutzzusammensetzung;
(ii) mindestens ein Additiv auf Grundlage von Kohlenstoff, das ausgewählt ist aus der Gruppe bestehend aus Kohlenstoff-Nanoröhren (CNTs) und analogen Kohlenstoffallotropen sowie deren Gemischen und Kombinationen in einer Menge von 0,001 bis 4 Gew.-% bezogen auf die Korrosionsschutzzusammensetzung,
wobei die analogen Kohlenstoffallotrope ausgewählt sind aus der Gruppe bestehend aus (i) wahlweise modifizierten Graphiten; (ii) wahlweise modifizierten Graphenen; (iii) Fullerenen; (iv) Rußen; (v) Kohlenstofffasern; (vi) wahlweise modifizierten Kohlenstoff-Nanohörnern (CNHs); (vii) Kohlenstoff-Nanocones (CNCs); (viii) zwiebelartigen Kohlenstoffen (OLCs); und (ix) deren Gemischen und Kombinationen;
(iii) mindestens ein Dispergiermittel (Dispergator) in einer Menge von 0,0001 bis 20 Gew.-% bezogen auf die Korrosionsschutzzusammensetzung,
wobei das mindestens eine Dispergiermittel ausgewählt ist aus der Gruppe bestehend aus(i) Polymeren und Copolymeren, die funktionelle Gruppen aufweisen und/oder Gruppen mit Pigmentaffinität; (ii) Alkylammoniumsalzen von Polymeren und Copolymeren; (iii) Polymeren und Copolymeren, die saure Gruppen aufweisen; (iv) Kamm-Copolymeren und Block-Copolymeren; (v) wahlweise modifizierten Acrylat-Block-Copolymeren; (vi) wahlweise modifizierten Polyurethanen; (vii) wahlweise modifizierten und/oder versalzten Polyaminen; (viii) Phosphorsäureestern; (ix) Ethoxylaten; (x) Polymeren und Copolymeren, die Fettsäureradikale aufweisen, (xi) wahlweise modifizierten Polyacrylaten; (xii) wahlweise modifizierten Polyestern; (xiii) Polyphosphaten; und (xiv) deren Gemischen;
wobei die Korrosionsschutzzusammensetzung eine Dispersion ist, die das Additiv auf Grundlage von Kohlenstoff in der kontinuierlichen Phase dispergiert umfasst.

13. Verwendung einer Korrosionsschutzzusammensetzung wie in Anspruch 12 definiert zum Bereitstellen einer Trägerschicht, insbesondere einer metallischen Trägerschicht, mit Korrosionsbeständigkeit und/oder Korrosionsschutzeigenschaften.

14. Korrosionsschutzbeschichtung, besonders aufgebracht auf eine Trägerschicht, insbesondere eine metallische Trägerschicht, wobei die Korrosionsschutzbeschichtung durch ein Verfahren wie definiert in einem der Ansprüche 1 bis 11 erhältlich ist, und/oder wobei die Korrosionsschutzbeschichtung durch die Verwendung einer Korrosionsschutzzusammensetzung wie in Anspruch 12 definiert erhältlich ist.

15. Trägerschicht, insbesondere metallische Trägerschicht, die mit Korrosionsbeständigkeit und/oder Korrosionsschutzeigenschaften versehen ist, wobei die Trägerschicht erhältlich ist durch Behandeln mindestens einer Oberfläche der Trägerschicht zumindest teilweise mit einem Verfahren wie in einem der Ansprüche 1 bis 11 definiert, und/oder durch Behandeln mindestens einer Oberfläche der Trägerschicht zumindest teilweise mit einer Korrosionsschutzzusammensetzung wie in Anspruch 12 definiert.

## Revendications

1. Processus pour doter un substrat, en particulier un substrat métallique, d'une résistance à la corrosion et/ou de propriétés anticorrosives,
dans lequel le processus comprend l'étape de processus de traitement d'au moins une surface du substrat au moins partiellement avec une composition anticorrosive ;
dans lequel la composition anticorrosive comprend :
(i) un milieu de dispersion en tant que phase continue en une quantité comprise entre 3 et 99,999 % en poids, en particulier en une quantité comprise entre 20 et 99,999 % en poids, de préférence en une quantité comprise entre 50 et 99,999 % en poids, sur la base de la composition anticorrosive ;
(ii) au moins un additif à base de carbone choisi parmi le groupe constitué de nanotubes de carbone (CNTs) et des allotropes de carbone analogues ainsi que des mélanges et combinaisons de ceux-ci en une quantité comprise entre 0,001 et 4 % en poids sur la base de la composition anticorrosive,
dans lequel les allotropes de carbone analogues sont choisis parmi le groupe constitué de (i) graphites éventuellement modifiés ; (ii) graphènes éventuellement modifiés ; (iii) fullerènes ; (iv) noirs de carbone ; (v) fibres de carbone ; (vi) nanocornets de carbone éventuellement modifiés (CNHs) ; (vii) nanocônes de carbone (CNCs) ; (viii) carbones de type oignon (OLCs) ; et (ix) des mélanges et combinaisons de ceux-ci ;
(iii) au moins un agent dispersant (dispersant) en une quantité comprise entre 0,0001 et 20 % en poids sur la base de la composition anticorrosive,
dans lequel l'au moins un agent dispersant est choisi parmi le groupe constitué de (i) polymères et copolymères possédant des groupes fonctionnels et/ou des groupes présentant une affinité pour les pigments ; (ii) sels d'alkylammonium de polymères et copolymères ; (iii) polymères et copolymères possédant des groupes acides ; (iv) copolymères en peigne et copolymères séquencés ; (v) copolymères séquencés d'acrylate éventuellement modifiés ; (vi) polyuréthanes éventuellement modifiés ; (vii) polyamines éventuellement modifiées et/ou salifiées ; (viii) esters d'acide phosphorique ; (ix) éthoxylates ; (x) polymères et copolymères possédant des radicaux acides gras ; (xi) polyacrylates éventuellement modifiés ; (xii) polyesters éventuellement modifiés ; (xiii) polyphosphates ; et (xiv) des mélanges de ceux-ci ;
dans lequel la composition anticorrosive est une dispersion comprenant l'additif à base de carbone dispersé dans la phase continue.

2. Processus selon la revendication 1,
dans lequel le substrat comprend ou se compose d'au moins un métal sensible à la corrosion, spécialement choisi parmi le groupe constitué du fer, du cuivre, du zinc, de l'aluminium, de l'argent, du titane, de l'étain ainsi que des mélanges, combinaisons et alliages de ceux-ci ; et/ou
dans lequel le substrat comprend ou se compose du fer, de l'acier, de l'acier inoxydable, du laiton, de l'aluminium, du cuivre ainsi que des mélanges, combinaisons et alliages de ceux-ci ; et/ou
dans lequel le substrat comprend ou se compose d'au moins un métal, un mélange de métaux, un composite ou alliage de métaux qui est sensible à la corrosion telle que l'oxydation, la corrosion par piqures, la rouille, la corrosion par fissuration et autres, spécialement dans lequel l'au moins un métal, un mélange de métaux, un composite ou alliage de métaux est choisi parmi le groupe constitué du fer, de l'acier, de l'aluminium, d'aluminium moulé, d'alliages moulés, d'alliages de magnésium et d'aluminium ainsi que des mélanges et combinaisons de ceux-ci ; et/ou
dans lequel le substrat comprend un composant, une partie, un élément de structure technique ou électronique, ou autres, spécialement pour une utilisation dans l'industrie automobile, aéronautique, des transports, de la construction, informatique ou électronique ; et/ou
dans lequel la surface du substrat à traiter avec la composition anticorrosive est mise en contact avec et/ou revêtue de la composition anticorrosive, spécialement sur l'entière surface, et/ou dans lequel la composition anticorrosive est appliquée sur au moins une surface du substrat à traiter, spécialement sur l'entière surface ; et/ou
dans lequel l'étape de processus de traitement d'une surface du substrat au moins partiellement avec une composition anticorrosive comprend un traitement de revêtement, spécialement sur l'entière surface.

3. Processus selon la revendication 1 ou la revendication 2,
dans lequel la composition anticorrosive est utilisée et/ou appliquée sur une épaisseur dans la gamme comprise entre 0,1 et 1 000 µm, en particulier dans la gamme comprise entre 0,5 et 900 µm, de préférence dans la gamme comprise entre 1 et 800 µm, plus préférablement dans la gamme comprise entre 5 et 700 µm, encore plus préférablement dans la gamme comprise entre 10 et 600 µm, bien plus préférablement dans la gamme comprise entre 20 et 500 µm ; et/ou
dans lequel la composition anticorrosive est utilisée et/ou appliquée en des quantités dans la gamme comprise entre 0,1 et 1 000 g/m², en particulier dans la gamme comprise entre 1 et 750 g/m², de préférence dans la gamme comprise entre 5 et 600 g/m², plus préférablement dans la gamme comprise entre 10 et 500 g/m², encore plus préférablement dans la gamme comprise entre 25 et 400 g/m², bien plus préférablement dans la gamme comprise entre 50 et 350 g/m² ; et/ou
dans lequel la composition anticorrosive comprend la phase continue, sur la base de la composition anticorrosive, en une quantité comprise entre 3 et 99,999 % en poids, en particulier en une quantité comprise entre 20 et 99,999 % en poids, plus en particulier en une quantité comprise entre 50 et 99,999 % en poids, bien plus en particulier en une quantité comprise entre 55 et 99,9 % en poids, spécialement en une quantité comprise entre 60 et 99,5 % en poids, de préférence en une quantité comprise entre 65 et 99 % en poids, plus préférablement en une quantité comprise entre 70 et 98 % en poids, encore plus préférablement en une quantité comprise entre 75 et 97 % en poids, bien plus préférablement en une quantité comprise entre 80 et 95 % en poids ; et/ou
dans lequel la composition anticorrosive comprend l'additif à base de carbone, sur la base de la composition anticorrosive, en une quantité comprise entre 0,005 et 3 % en poids, de préférence en une quantité comprise entre 0,01 et 2 % en poids, plus préférablement en une quantité comprise entre 0,015 et 1 % en poids, encore plus préférablement en une quantité comprise entre 0,02 et 0,5 % en poids, bien plus préférablement en une quantité comprise entre 0,02 et 0,1 % en poids, encore bien plus préférablement en une quantité comprise entre 0,02 et 0,0999 % en poids ; et/ou
dans lequel la composition anticorrosive comprend le dispersant, sur la base de la composition anticorrosive, en une quantité comprise entre 0,001 et 15 % en poids, en particulier en une quantité comprise entre 0,002 et 10 % en poids, de préférence en une quantité comprise entre 0,005 et 5 % en poids, plus préférablement en une quantité comprise entre 0,01 et 2 % en poids, encore plus préférablement en une quantité comprise entre 0,02 et 1 % en poids ; et/ou
dans lequel la composition anticorrosive comprend l'additif à base de carbone, sur la base de la composition anticorrosive, en une quantité d'au moins 0,001 % en poids, en particulier en une quantité d'au moins 0,002 % en poids, de préférence en une quantité d'au moins 0,005 % en poids, plus préférablement en une quantité d'au moins 0,01% en poids ; et/ou dans lequel la composition anticorrosive comprend l'additif à base de carbone, sur la base de la composition anticorrosive, en une quantité de moins de 0,1 % en poids.

4. Processus selon l'une quelconque des revendications précédentes,
dans lequel la phase continue comprend ou constitue une matrice, spécialement une matrice pour les ingrédients restants ; et/ou
dans lequel la phase continue est choisie parmi le groupe constitué de résines réticulables, de résines non réticulables ainsi que des mélanges et combinaisons de ceux-ci ; et/ou
dans lequel la phase continue est présente dans un état solide ou liquide sous pression atmosphérique (101,325 kPa) et dans une gamme de température comprise entre 10 et 100 °C, spécialement dans une gamme de température comprise entre 15 et 70°C, de préférence dans une gamme de température comprise entre 20 et 50°C ; et/ou
dans lequel la phase continue est durcissable à l'aide d'au moins un procédé choisi parmi (i) des procédés chimiques ; (ii) des procédés oxydants ; (iii) des procédés thermiques, spécialement la chaleur ; (iv) des procédés d'irradiation, spécialement le rayonnement UV, le rayonnement micro-ondes, le rayonnement IR; (v) l'humidité; et (vi) des combinaisons de ceux-ci; spécialement des procédés chimiques ; et/ou
dans lequel la phase continue est choisie parmi le groupe constitué d'acryliques thermodurcissables, d'uréthanes, de carbamates, de carbonates, de polyesters, d'époxy, de silicones ainsi que des mélanges et combinaisons de ceux-ci, spécialement d'époxy ; et/ou
dans lequel la phase continue est choisie parmi le groupe constitué d'au moins un des (i) polyuréthanes à un composant ; (ii) polyuréthanes à deux composants ; (iii) acryliques ; (iv) uréthanes modifiés par une huile; (v) alkydes longues en huile ; (vi) dispersions de polyuréthane; (vii) émulsions d'acrylique ; (viii) époxy ; et (ix) alkydes solubles dans l'eau ; spécialement époxy ; et/ou
dans lequel la phase continue comprend en outre au moins un composant supplémentaire choisi parmi le groupe constitué de (i) solvants, spécialement des solvants aqueux, des solvants organiques ainsi que des mélanges et combinaisons de ceux-ci ; (ii) d'agents de réticulation, spécialement des agents de réticulation à base d'amines ; (iii) d'agents de couplage ; et des mélanges et combinaisons de ceux-ci.

5. Processus selon l'une quelconque des revendications précédentes,
dans lequel l'au moins un additif à base de carbone comprend ou se compose de nanotubes de carbone (CNTs), spécialement des nanotubes de carbone choisis parmi le groupe constitué de (i) nanotubes de carbone à paroi unique (SWCNTs ou SWNTs); (ii) de nanotubes de carbone à parois multiples (MWCNTs ou MWNTs), spécialement entre 2 et 30 parois, de préférence des nanotubes de carbone entre 3 et 15 parois; et (iii) des mélanges et combinaisons de ceux-ci ; et/ou dans lequel l'au moins un additif à base de carbone comprend ou se compose de nanotubes de carbone (CNTs) possédant des diamètres intérieurs moyens dans la gamme comprise entre 0,4 et 60 nm, en particulier dans la gamme comprise entre 1 et 10 nm, de préférence dans la gamme comprise entre 2 et 6 nm ; et/ou
dans lequel l'au moins un additif à base de carbone comprend ou se compose de nanotubes de carbone (CNTs) possédant des diamètres extérieurs moyens dans la gamme comprise entre 1 et 80 nm, en particulier dans la gamme comprise entre 5 et 30 nm, de préférence dans la gamme comprise entre 10 et 20 nm ; et/ou
dans lequel l'au moins un additif à base de carbone comprend ou se compose de nanotubes de carbone (CNTs) possédant des longueurs moyennes dans la gamme comprise entre 0,01 et 1 000 µm, en particulier dans la gamme comprise entre 0,3 et 500 µm, de préférence dans la gamme comprise entre 0,4 et 200 µm, plus préférablement dans la gamme comprise entre 1 et 100 µm, bien plus préférablement entre 0,5 et 30 µm; et/ou
dans lequel l'au moins un additif à base de carbone comprend ou se compose de nanotubes de carbone (CNTs) possédant une résistance à la traction par nanotube de carbone d'au moins 1 GPa, en particulier d'au moins 5 GPa, de préférence d'au moins 10 GPa ; et/ou
dans lequel l'au moins un additif à base de carbone comprend ou se compose de nanotubes de carbone (CNTs) possédant un module d'élasticité par nanotube de carbone d'au moins 0,1 TPa, en particulier au moins 0,5 TPa, de préférence au moins 1 TPa ; et/ou dans lequel l'au moins un additif à base de carbone comprend ou se compose de nanotubes de carbone (CNTs) possédant une conductivité thermique d'au moins 500 W/mK, en particulier d'au moins 1 000 W/mK, de préférence d'au moins 2 000 W/mK ; et/ou
dans lequel l'au moins un additif à base de carbone comprend ou se compose de nanotubes de carbone (CNTs) possédant une conductivité électrique d'au moins 10³ S/cm, en particulier d'au moins 0,5 x 10⁴ S/cm, de préférence d'au moins 10⁴ S/cm ; et/ou
dans lequel l'au moins un additif à base de carbone comprend ou se compose de nanotubes de carbone (CNTs) possédant une densité de masse dans la gamme comprise entre 0,01 et 0,3 g/cm³, en particulier dans la gamme comprise entre 0,02 et 0,2 g/cm³, de préférence dans la gamme comprise entre 0,1 et 0,2 g/cm³.

6. Processus selon l'une quelconque des revendications précédentes, dans lequel l'additif à base de carbone est incorporé et/ou utilisé sous forme d'une dispersion,
spécialement dans lequel la dispersion peut être obtenue en dispersant l'additif à base de carbone, spécialement sans traitement préalable de l'additif à base de carbone, dans une phase continue, spécialement dans au moins un milieu de dispersion, en présence d'au moins un agent dispersant (dispersant), avec l'introduction d'un apport énergétique suffisant pour disperser ; et/ou
spécialement dans lequel l'additif à base de carbone est dispersé en des quantités comprises entre 1 x 10⁻⁵ % et 30 % en poids, en particulier en des quantités comprises entre 1 x 10⁻⁴ % et 20 % en poids, de préférence en des quantités comprises entre 1 x 10⁻³ % et 10 % en poids, plus préférablement en des quantités comprises entre 1 x 10⁻² % to 7,5 % en poids, très préférablement en des quantités comprises entre 1 x 10⁻¹ % to 5 % en poids, sur la base de la dispersion résultante, dans la phase continue ; et/ou
spécialement dans lequel l'agent dispersant (dispersant) est utilisé en des quantités comprises entre 10 % et 400 % en poids, en particulier en des quantités comprises entre 25 % et 350 % en poids, de préférence en des quantités comprises entre 50 % et 300 % en poids, plus préférablement en des quantités comprises entre 75 % et 275 % en poids, très préférablement en des quantités comprises entre 100 % et 250 % en poids, sur la base de l'additif à base de carbone à disperser ; et/ou
spécialement dans lequel l'opération de dispersion est effectuée sur une période comprise entre 0,01 et 30 minutes, en particulier sur une période comprise entre 0,1 et 20 minutes, de préférence sur une période comprise entre 0,2 et 15 minutes, plus préférablement sur une période comprise entre 0,5 et 10 minutes, très préférablement sur une période comprise entre 0,5 et 5 minutes, spécialement sur la base de 1g d'additif à base de carbone à disperser ; et/ou
spécialement dans lequel l'apport énergétique a lieu au moyen d'un traitement par ultrasons et/ou dans lequel la quantité d'énergie introduite, calculée en tant qu'énergie introduite par quantité unitaire d'additif à base de carbone à disperser, est comprise entre 5 000 et 500 000 kJ/kg, en particulier entre 10 000 et 250 000 kJ/kg, de préférence entre 15 000 et 100 000 kJ/kg, plus préférablement entre 25 000 et 50 000 kJ/kg ; et/ou
spécialement dans lequel l'opération de dispersion est précédée d'une étape de procédé dans laquelle l'additif à base de carbone à disperser est subséquemment mis en contact et homogénéisé avec la phase continue, en particulier avec le moyen de dispersion, et avec l'agent dispersant et également avec tout autre constituant et/ou ingrédient de la dispersion, en particulier avec agitation ; et/ou
spécialement dans lequel la dispersion est effectuée à des températures en dessous de la température d'ébullition de la phase continue, en particulier du milieu de dispersion, en particulier à des températures dans la gamme comprise entre 10 et 100 °C, de préférence dans la gamme comprise entre 15 et 70 °C, en particulier avec l'opération de dispersion étant effectuée avec un refroidissement le cas échéant ; et/ou
spécialement dans lequel l'opération de dispersion est effectuée sans prétraitement préalable de l'additif à base de carbone à disperser, en particulier sans oxydation, traitement chimique, traitement thermique, polarisation ou halogénation préalable.

7. Processus selon l'une quelconque des revendications précédentes, dans lequel l'additif à base de carbone a été fonctionnalisé, en particulier par au moins un agent dispersant (dispersant), de préférence par au moins un agent dispersant tel que défini selon la revendication 1 et/ou la revendication 8 ;
spécialement dans lequel l'additif à base de carbone a été fonctionnalisé par mise en contact et/ou traitement et/ou mise en réaction de l'additif à base de carbone avec l'au moins un agent dispersant (dispersant), spécialement en présence d'un milieu de dispersion et/ou spécialement au sein d'une dispersion ; et/ou
spécialement dans lequel la fonctionnalisation de l'additif à base de carbone a été effectuée sans prétraitement préalable via une oxydation, traitement chimique, traitement thermique, polarisation ou halogénation ; et/ou
spécialement dans lequel l'additif à base de carbone a été fonctionnalisé exclusivement par mise en contact et/ou traitement et/ou mise en réaction de l'additif à base de carbone avec l'au moins un agent dispersant (dispersant).

8. Processus selon l'une quelconque des revendications précédentes,
dans lequel l'au moins un agent dispersant est basé sur un polymère fonctionnalisé possédant une masse moléculaire moyenne, de préférence une masse moléculaire moyenne en nombre, d'au moins 500 g/mol, de préférence d'au moins 1 000 g/mol, plus préférablement d'au moins 2 000 g/mol, spécialement comme déterminé via chromatographie d'exclusion stérique (CES), en particulier selon la norme allemande DIN 55672 ; et/ou
dans lequel l'au moins un agent dispersant comprend des groupes fonctionnels capables d'interagir avec la phase continue et/ou avec l'additif à base de carbone, spécialement avec la phase continue et avec l'additif à base de carbone.

9. Processus selon l'une quelconque des revendications précédentes,
dans lequel la composition anticorrosive comprend des ingrédients supplémentaires, spécialement choisis parmi le groupe constitué de (i) modificateurs de la rhéologie, spécialement des modificateurs de la rhéologie aromatiques ; (ii) promoteurs d'adhérence, spécialement des silanes ; (iii) nanoparticules, spécialement des nanoparticules inorganiques, organiques ou organométalliques; (iv) agents de mise à niveau, spécialement des polyacrylates ; (v) antimousses ; (vi) émulsifiants ; (vii) charges d'apport ; (viii) colorants ; (ix) pigments ; (x) plastifiants ; (xii) stabilisateurs ; (xiii) catalyseurs ; et (xiv) des combinaisons et mélanges de ceux-ci ; et/ou
dans lequel la composition anticorrosive comprend les ingrédients supplémentaires, sur la base de la composition anticorrosive, en une quantité totale comprise entre 0,001 et 90 % en poids, en particulier en une quantité totale comprise entre 0,01 et 75 % en poids, de préférence en une quantité totale comprise entre 0,1 et 50 % en poids, plus préférablement en une quantité totale comprise entre 0,15 et 25 % en poids.

10. Processus selon l'une quelconque des revendications précédentes, dans lequel la composition anticorrosive est exempte de chromate et/ou ne contient pas de chromate, spécialement aucun chromate de zinc et/ou chromate de strontium, de préférence aucun chrome hexavalent.

11. Processus selon l'une quelconque des revendications précédentes,
dans lequel l'étape de processus de traitement du substrat avec la composition anticorrosive est suivie d'une étape de séchage et/ou de durcissement, spécialement sous de la chaleur et/ou un traitement par irradiation, spécialement dans lequel la phase continue est au moins partiellement éliminée et/ou durcie ;
spécialement dans lequel le substrat comprenant et/ou fourni avec la composition anticorrosion séchée et/ou durcie est traitée avec une ou plusieurs couches de revêtement supplémentaires éventuellement comprennent des pigments et/ou des matériaux d'apport.

12. Composition anticorrosive, spécialement pour fournir un substrat, en particulier un substrat métallique, présentant une résistance à la corrosion et/ou présentant des propriétés anticorrosives,
dans lequel la composition anticorrosive comprend :
(i) un milieu de dispersion en tant qu'une phase continue en une quantité comprise entre 3 et 99,999 % en poids, en particulier en une quantité comprise entre 20 et 99,999 % en poids, de préférence en une quantité comprise entre 50 et 99,999 % en poids, sur la base de la composition anticorrosive ;
(ii) au moins un additif à base de carbone choisi parmi le groupe constitué de nanotubes de carbone (CNTs) et d'allotropes de carbone analogues ainsi que des mélanges et combinaisons de ceux-ci en une quantité comprise entre 0,001 et 4 % en poids sur la base de la composition anticorrosive,
dans lequel les allotropes de carbone analogues sont choisis parmi le groupe constitué de (i) graphites éventuellement modifiés ; (ii) graphènes éventuellement modifiés ; (iii) fullerènes ; (iv) noirs de carbone ; (v) fibres de carbone ; (vi) nanocornets de carbone éventuellement modifiés (CNHs) ; (vii) nanocônes de carbone (CNCs); (viii) carbones de type oignon (OLCs); et (ix) des mélanges et combinaisons de ceux-ci ;
(iii) au moins un agent dispersant (dispersant) dans une quantité comprise entre 0,0001 et 20 % en poids sur la base de la composition anticorrosive,
dans lequel l'au moins un agent dispersant est choisi parmi le groupe constitué de (i) polymères et copolymères possédant des groupes fonctionnels et/ou groupes présentant une affinité pour les pigments ; (ii) sels d'alkylammonium of polymères et copolymères ; (iii) polymères et copolymères possédant des groupes acides ; (iv) copolymères en peigne et copolymères séquencés; (v) copolymères séquencés d'acrylate éventuellement modifiés ; (vi) polyuréthane éventuellement modifiés ; (vii) polyamines éventuellement modifiées et/ou salifiées ; (viii) esters d'acide phosphorique ; (ix) éthoxylates ; (x) polymères et copolymères possédant des radicaux acides gras; (xi) polyacrylates éventuellement modifiés; (xii) polyesters éventuellement modifiés; (xiii) polyphosphates ; et (xiv) des mélanges de ceux-ci ;
dans lequel la composition anticorrosive est une dispersion comprenant l'additif à base de carbone dispersé dans la phase continue.

13. Utilisation d'une composition anticorrosive telle que définie selon la revendication 12 pour fournir un substrat, en particulier un substrat métallique, présentant une résistance à la corrosion et/ou présentant des propriétés anticorrosives.

14. Revêtement anticorrosion, spécialement appliqué sur un substrat, en particulier un substrat métallique, dans lequel le revêtement anticorrosion peut être obtenu par un processus tel que défini selon l'une quelconque des revendications 1 à 11 et/ou dans lequel le revêtement anticorrosion peut être obtenu en utilisant une composition anticorrosive tel que défini selon la revendication 12.

15. Substrat, en particulier un substrat métallique, présentant une résistance à la corrosion et/ou présentant des propriétés anticorrosives, lequel substrat peut être obtenu en traitant au moins une surface du substrat au moins partiellement par un processus tel que défini selon l'une quelconque des revendications 1 à 11 et/ou en traitant au moins une surface du substrat au moins partiellement avec une composition anticorrosive tel que défini selon la revendication 12.
